# EUROPÄISCHE PATENTANMELDUNG

(11) **EP 3 557 591 A1**
(43) Veröffentlichungstag der Anmeldung: **23.10.2019**
(21) Anmeldenummer: 19000182.6
(22) Anmeldetag: 12.04.2019
(51) Int. Cl.: G21K 5/08

(54) **BAHNFÜHRUNGSWALZE MIT STIRNSEITIGER STRAHLUNGSABSCHIRMUNG SOWIE BESTRAHLUNGSVORRICHTUNG**

(30) Priorität: 12.04.2018 DE 102018003002
(71) Anmelder: Crosslinking AB, 30244 Halmstad (SE)
(72) Erfinder: LAURELL, Bengt, SE-30594 Halmstad (SE); FÖLL, Eberhard, 72147 Nehren (DE)
(74) Vertreter: SR Huebner - Munich Patentanwaltspartnerschaft mbB

(57) **Zusammenfassung**

Es wird eine Walze (2) für eine Bestrahlungsvorrichtung beschrieben, wobei die Walze dazu ausgelegt ist, eine zu bestrahlende Materialbahn an mindestens einem Elektronenstrahler (8) vorbei zu führen. Die Walze umfasst einen ersten stirnseitigen Bereich (14) der Walze, wobei der Durchmesser des ersten stirnseitigen Bereichs kleiner ist als der Durchmesser der Walze, sowie eine Mantelfläche (16) der Walze, die als Mantelfläche eines geraden Kreiszylinders ausgebildet ist. Die Mantelfläche erstreckt sich in axialer Richtung von einer ersten axialen Position zu einer zweiten axialen Position der Walze, wobei die erste axiale Position einen axialen Abstand zum Rand des ersten stirnseitigen Bereichs aufweist, der zwischen 3% und 25% der Länge der Walze beträgt, und wobei die zweite axiale Position vom ersten stirnseitigen Bereich weiter entfernt ist als die erste axiale Position. Die Walze umfasst einen ersten gewölbten Übergangsbereich (15), der sich vom Rand des ersten stirnseitigen Bereichs ausgehend ringförmig in einem kontinuierlichen Verlauf bis zur ersten axialen Position der Walze erstreckt. Dabei ist in einer Längsebene durch die Mittenachse der Walze betrachtet eine Krümmung der Kontur der Walze am Übergang vom ersten stirnseitigen Bereich zum ersten gewölbten Übergangsbereich, innerhalb des ersten gewölbten Übergangsbereichs und am Übergang vom ersten gewölbten Übergangsbereich zur Mantelfläche jeweils kleiner als eine maximale Krümmung, die einem minimalen Krümmungsradius von 5% des Durchmessers der Walze entspricht.

## Beschreibung

### Gebiet der Erfindung

Die Erfindung betrifft eine Walze für eine Bestrahlungsvorrichtung sowie eine Bestrahlungsvorrichtung für die Bestrahlung einer Materialbahn mit Elektronen. Des Weiteren betrifft die Erfindung ein Verfahren zum Bereitstellen einer Strahlungsabschirmung in einer Bestrahlungsvorrichtung.

### Hintergrund der Erfindung

In der deutschen Patentanmeldung DE 10 2004 048 881 A1 ist eine Bestrahlungsvorrichtung zur Bestrahlung einer Materialbahn mit Elektronen beschrieben. Zur Durchführung der Bestrahlung wird die Materialbahn über eine Bahnführungswalze an dem Elektronenstrahler vorbei geführt, wobei die Bahnführungswalze dazu ausgelegt ist, die auftreffenden Elektronen und die dabei entstehende Röntgenstrahlung zu absorbieren.

### Der Erfindung zugrundeliegende Aufgabe

Es ist Aufgabe der Erfindung, eine Walze für eine Bestrahlungsvorrichtung, eine Bestrahlungsvorrichtung sowie ein Verfahren zum Bereitstellen einer Strahlungsabschirmung zur Verfügung zu stellen, wobei die Abschirmung von hochenergetischer Strahlung insbesondere an den stirnseitigen Bereichen der Walze verbessert ist.

### Erfindungsgemäße Lösung

Die Lösung der gestellten Aufgabe gelingt durch Bereitstellen einer Walze für eine Bestrahlungsvorrichtung, wobei die Walze dazu ausgelegt ist, eine zu bestrahlende Materialbahn an mindestens einem Elektronenstrahler vorbei zu führen. Die Walze umfasst einen ersten stirnseitigen Bereich der Walze, wobei der Durchmesser des ersten stirnseitigen Bereichs kleiner ist als der Durchmesser der Walze, sowie eine Mantelfläche der Walze, die als Mantelfläche eines geraden Kreiszylinders ausgebildet ist. Die Mantelfläche erstreckt sich in axialer Richtung von einer ersten axialen Position zu einer zweiten axialen Position der Walze, wobei die erste axiale Position einen axialen Abstand zum Rand des ersten stirnseitigen Bereichs aufweist, der zwischen 3% und 25% der Länge der Walze beträgt, und wobei die zweite axiale Position vom ersten stirnseitigen Bereich weiter entfernt ist als die erste axiale Position. Die Walze weist einen ersten gewölbten Übergangsbereich auf, der sich vom Rand des ersten stirnseitigen Bereichs ausgehend ringförmig in einem kontinuierlichen Verlauf bis zur ersten axialen Position der Walze erstreckt. Dabei ist in einer Längsebene durch die Mittenachse der Walze betrachtet eine Krümmung der Kontur der Walze am Übergang vom ersten stirnseitigen Bereich zum ersten gewölbten Übergangsbereich, innerhalb des ersten gewölbten Übergangsbereichs und am Übergang vom ersten gewölbten Übergangsbereich zur Mantelfläche jeweils kleiner als eine maximale Krümmung, die einem minimalen Krümmungsradius von 5% des Durchmessers der Walze entspricht.

Die erfindungsgemäße Walze ist zur Verwendung als Bahnführungswalze ausgelegt und weist eine Mantelfläche auf, die als Mantelfläche eines geraden Kreiszylinders ausgebildet ist. Eine zu bestrahlende Materialbahn kann über die Mantelfläche der Walze an einer Bestrahlungseinheit vorbeigeführt werden, welche beispielsweise ein oder mehrere Elektronenstrahler aufweist. Hierzu ist die Walze vorzugsweise um eine Drehachse drehbar gelagert, wobei es sich bei der Drehachse um die Mittenachse des Zylindermantels der Mantelfläche handelt. Gemäß der spezifischen geometrischen Ausgestaltung der Bahnführungswalze weist der erste stirnseitige Bereich einen geringeren Durchmesser auf als die Mantelfläche der Walze, sodass die Fläche des ersten stirnseitigen Bereichs kleiner ist als die Querschnittsfläche der Walze. An den stirnseitigen Bereich der Walze schließt sich ein ringförmiger, konvex nach außen gewölbter Übergangsbereich an, der sich bis zu einer ersten axialen Position erstreckt. Die erste axiale Position weist vom Rand des ersten stirnseitigen Bereichs einen axialen Abstand auf, der zwischen 3% und 25% der Länge der Walze beträgt. Der axiale Abstand ist die Distanz in axialer Richtung zwischen dem Rand des ersten stirnförmigen Bereichs und der ersten axialen Position. An der ersten axialen Position beginnt die Mantelfläche der Walze, die sich in axialer Richtung bis zu einer zweiten axialen Position erstreckt. Insofern wird durch den Übergangsbereich zwischen dem stirnseitigen Bereich der Walze und der Mantelfläche der Walze ein ringförmiger, konvex nach außen gewölbter Übergangsbereich geschaffen, der einen abgerundeten Übergang zwischen dem stirnseitigen Bereich und der Mantelfläche herstellt. Wenn man die Kontur der Walze in einer Längsebene betrachtet, die durch die Mittenachse der Walze hindurch verläuft, dann ergibt sich am Übergang vom ersten stirnseitigen Bereich zum ersten Übergangsbereich, innerhalb des ersten gewölbten Übergangsbereichs und am Übergang vom ersten Übergangsbereich zur Mantelfläche ein gewölbter Verlauf der Kontur, wobei an jedem Punkt der Kontur die Krümmung kleiner ist als ein vorgegebener maximaler Krümmungswert. Daher ergibt sich ein abgerundeter Verlauf, wobei Kanten am Übergang vom stirnseitigen Bereich zur Mantelfläche vermieden werden. An jedem Punkt des ersten Übergangsbereichs ist der Verlauf abgerundet. Dabei entspricht die maximale Krümmung einem minimalen Krümmungsradius. Wenn man also in einer Längsebene durch die Mittenachse der Walze die Kontur der Walze am Übergang vom ersten stirnseitigen Bereich , zum ersten Übergangsbereich, innerhalb des ersten gewölbten Übergangsbereichs und am Übergang vom ersten Übergangsbereich zur Mantelfläche betrachtet, ist an jedem Punkt dieser Kontur der jeweilige Krümmungsradius größer als ein vorgegebener minimaler Krümmungsradius, wobei der vorgegebene minimale Krümmungsradius vorzugsweise 5% des Durchmessers der Mantelfläche der Walze beträgt. Auf diese Weise erhält man einen weich abgerundeten Verlauf im Übergangsbereich, wobei der Krümmungsradius an jedem Punkt vorzugsweise mehr als 5% des Durchmessers der Mantelfläche beträgt. Dadurch werden Kanten am stirnseitigen Endprofil der Walze vermieden. Mittels des konvex nach außen gewölbten Übergangsbereichs der Walze lässt sich eine effektive Abschirmung von hochenergetischer Strahlung, insbesondere von Röntgenstrahlung erreichen. Beispielsweise kann vorgesehen sein, dass die Außenkontur der Walze von einer dazu komplementär geformten Fläche der Bestrahlungsvorrichtung umgeben ist, sodass sich ein Spaltbereich zwischen der Außenfläche der Walze und der dazu komplementären Innenfläche der Bestrahlungsvorrichtung ausbildet. Hochenergetische Strahlung, insbesondere Röntgenstrahlung, wie sie beispielsweise bei der Bestrahlung mit Elektronen entsteht, wird innerhalb dieses Spaltbereichs mehrfach gebrochen und auf diese Weise wirkungsvoll abgeschwächt. Insbesondere der konvex nach außen gewölbte Verlauf des Übergangsbereichs erzwingt dabei eine mehrfache Brechung der Strahlung, die für eine wirkungsvolle Abschirmung sorgt.

Die Lösung der gestellten Aufgabe gelingt außerdem durch Bereitstellen einer Bestrahlungsvorrichtung für die Bestrahlung einer Materialbahn mit Elektronen. Die Bestrahlungsvorrichtung umfasst eine drehbar gelagerte Walze wie oben beschrieben zur Führung einer zu bestrahlenden Materialbahn sowie eine Bestrahlungseinheit mit einer Aufnahme, die sich in Längsrichtung der Walze erstreckt und dazu ausgelegt ist, einen Teilabschnitt der Walze zu umschließen, wobei innerhalb der Aufnahme mindestens ein Elektronenstrahler angeordnet ist, der dazu ausgelegt ist, eine über die Walze führbare Materialbahn mit Elektronen zu bestrahlen.

Eine erfindungsgemäße Bestrahlungsvorrichtung umfasst eine drehbar gelagerte Walze wie oben beschrieben zur Führung einer zu bestrahlenden Materialbahn. Darüber hinaus umfasst die Bestrahlungsvorrichtung eine Bestrahlungseinheit mit einer Aufnahme, die sich in Längsrichtung der Walze erstreckt und dazu ausgelegt ist, einen Teilabschnitt der Walze zu umschließen, wobei innerhalb der Aufnahme mindestens ein Elektronenstrahler angeordnet ist, der dazu ausgelegt ist, eine über die Walze führbare Materialbahn mit Elektronen zu bestrahlen. Bei dieser Bestrahlungsvorrichtung ist ein Teilabschnitt der Walze innerhalb einer in axialer Richtung verlaufenden Aufnahme aufgenommen, die den Teilabschnitt der Walze als konkave Hohlform umschließt. Bei einer Drehung der Walze wird die Mantelfläche der Walze sowie eine von der Walze geführte Materialbahn an dem in der Aufnahme angeordneten mindestens einen Elektronenstrahler vorbei geführt und mit Elektronen bestrahlt. Dabei kann die Innenfläche der Aufnahme so geformt sein, dass sie dem konvex nach außen gewölbten Verlauf des Übergangsbereichs der Walze folgt.

Vorzugsweise ist ein Teilbereich der Aufnahme als komplementäre Form zu dem konvex nach außen gewölbten Übergangsbereichs der Walze ausgebildet, sodass zwischen der Innenfläche der Aufnahme und dem Übergangsbereich der Walze ein konvex gewölbter Spaltbereich ausgebildet wird, durch den die bei der Elektronenbestrahlung erzeugte hochenergetische Strahlung, insbesondere Röntgenstrahlung, durch mehrfache Brechung in ihrer Intensität stark verringert wird. Durch den so geschaffenen gewölbt ausgebildeten Spaltbereich lässt sich daher eine wirksame Strahlungsabschirmung erzielen. Insbesondere können durch den konvex gewölbten Übergangsbereich auch solche Röntgenstrahlen abgefangen werden, die relativ zur Drehachse der Walze in windschiefer Richtung verlaufen. Es hat sich gezeigt, dass eine konvex nach außen gewölbte Form des stirnseitigen Endprofils einer abgestuften Formgebung bei der Strahlungsabschirmung überlegen ist.

Die Lösung der gestellten Aufgabe gelingt außerdem durch Bereitstellen einer Bestrahlungsvorrichtung für die Bestrahlung einer Materialbahn mit Elektronen. Die Bestrahlungsvorrichtung umfasst eine drehbar gelagerte Walze zur Führung einer zu bestrahlenden Materialbahn, wobei die Walze ein erstes stirnseitiges Endprofil an einem ersten axialen Ende der Walze und eine Mantelfläche umfasst, wobei die Mantelfläche der Walze als Mantelfläche eines geraden Kreiszylinders ausgebildet ist und sich von dem ersten stirnseitigen Endprofil aus in axialer Richtung der Walze erstreckt. Außerdem umfasst die Bestrahlungsvorrichtung eine Bestrahlungseinheit mit einer Aufnahme, wobei sich die Aufnahme in Längsrichtung der Walze erstreckt und dazu ausgelegt ist, einen Teilabschnitt der Walze zu umschließen, wobei innerhalb der Aufnahme mindestens ein Elektronenstrahler angeordnet ist, der dazu ausgelegt ist, eine über die Walze führbare Materialbahn mit Elektronen zu bestrahlen. Dabei weist das erste stirnseitige Endprofil der Walze einen konvex gewölbten Bereich auf. Die Bestrahlungsvorrichtung umfasst einen Abschirmblock zur Strahlungsabschirmung, wobei der Abschirmblock eine Auflagefläche aufweist, über die der Abschirmblock an einer Montagefläche der Bestrahlungseinheit lösbar befestigbar ist. Außerdem weist der Abschirmblock eine im Abschirmblock vorgesehene Ausnehmung auf, wobei zumindest ein Teilbereich der Ausnehmung als negative Hohlform zu zumindest einem Teilbereich des konvex gewölbten Bereichs ausgebildet ist.

Die Bestrahlungsvorrichtung umfasst die Walze sowie eine Bestrahlungseinheit mit einer Aufnahme, die einen Teilabschnitt der Walze umschließt. Eine zu bestrahlende Materialbahn wird mittels der Walze an mindestens einem in der Aufnahme angeordneten Elektronenstrahler vorbei geführt und mit Elektronen bestrahlt. Bei der Elektronenstrahlung entsteht insbesondere im Zwischenraum zwischen der Walzenoberfläche und der Aufnahme hochenergetische Röntgenstrahlung. Zur Abschirmung dieser im bogenförmigen Spalt zwischen Walze und Aufnahme auftretenden Röntgenstrahlung wird ein Abschirmblock eingesetzt, der mit seiner Auflagefläche an eine Montagefläche der Bestrahlungseinheit lösbar befestigt wird. Der Abschirmblock hat eine beliebige geometrische Grundform und weist eine Ausnehmung auf, die das stirnseitige Endprofil der Walze zumindest teilweise aufnimmt, wenn der Abschirmblock an der vorgesehenen Montagefläche der Bestrahlungseinheit angebracht ist. Mittels des Abschirmblocks kann insbesondere die Röntgenstrahlung abgeschirmt werden, die im bogenförmigen Zwischenraum zwischen der Walze und der die Walze umschließenden Aufnahme entsteht. Dabei kann die Innenwandung der Ausnehmung vorzugsweise dem Verlauf des stirnseitigen Endprofils dergestalt folgen, dass die Strahlung mehrfach gebrochen wird und so eine wirksame Strahlungsabschirmung erzielbar ist. Vorzugsweise wird ein gewölbter Spaltbereich zwischen dem stirnseitigen Endprofil und der Ausnehmung ausgebildet. Die Abschirmung der aus dem bogenförmigen Spalt austretenden Röntgenstrahlung mittels eines Abschirmblocks hat den Vorteil, dass der Abschirmblock auf einfache Weise mit seiner Ausnehmung auf das stirnseitige Endprofil der Walze und auf die Montagefläche der Bestrahlungseinheit aufsetzbar und dort lösbar befestigbar ist. Der Auf- und Abbau der Bestrahlungsvorrichtung wird daher vereinfacht. Darüber hinaus kann auch vorgesehen sein, dass die Position des Abschirmblocks relativ zur Walze justierbar ist. Beispielsweise kann der Spaltbereich zwischen dem stirnseitigen Endprofil der Walze und der Innenfläche der Ausnehmung einjustiert werden, um eine bestmögliche Strahlungsabschirmung zu erreichen. Durch die abnehmbaren Abschirmblöcke wird die Montage und Wartung der Bestrahlungsvorrichtung erleichtert.

Ein erfindungsgemäßes Verfahren dient zum Bereitstellen einer Strahlungsabschirmung in einer Bestrahlungsvorrichtung. Die Bestrahlungsvorrichtung umfasst eine drehbar gelagerte Walze zur Führung einer zu bestrahlenden Materialbahn, wobei die Walze ein erstes stirnseitiges Endprofil an einem ersten axialen Ende der Walze und eine Mantelfläche umfasst, wobei das erste stirnseitige Endprofil einen konvex gewölbten Bereich umfasst, wobei die Mantelfläche der Walze als Mantelfläche eines geraden Kreiszylinders ausgebildet ist und sich von dem ersten stirnseitigen Endprofil aus in axialer Richtung der Walze erstreckt. Die Bestrahlungsvorrichtung umfasst außerdem eine Bestrahlungseinheit mit einer Aufnahme, wobei sich die Aufnahme in Längsrichtung der Walze erstreckt und dazu ausgelegt ist, einen Teilabschnitt der Walze zu umschließen, wobei innerhalb der Aufnahme mindestens ein Elektronenstrahler angeordnet ist, der dazu ausgelegt ist, eine über die Walze führbare Materialbahn mit Elektronen zu bestrahlen. Darüber hinaus umfasst die Bestrahlungsvorrichtung einen Abschirmblock zur Strahlungsabschirmung. Der Abschirmblock weist eine Auflagefläche auf, über die der Abschirmblock an einer Montagefläche der Bestrahlungseinheit lösbar befestigbar ist. Außerdem weist der Abschirmblock eine im Abschirmblock vorgesehene Ausnehmung auf. Das Verfahren umfasst einen Schritt des Anbringens des Abschirmblocks an einer Montagefläche der Bestrahlungseinheit dergestalt, dass sich zumindest ein Teil des ersten stirnseitigen Endprofils der Walze in die Ausnehmung des Abschirmblocks hinein erstreckt, wobei zumindest ein Teilbereich der Ausnehmung als negative Hohlform zu zumindest einem Teilbereich des konvex gewölbten Bereichs ausgebildet ist.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

### Walze für eine Bestrahlungsvorrichtung

Vorzugsweise verläuft in einer Längsebene durch die Mittenachse der Walze betrachtet eine Steigung der Kontur der Walze am Übergang vom ersten stirnseitigen Bereich zum ersten gewölbten Übergangsbereich, innerhalb des ersten gewölbten Übergangsbereichs und am Übergang vom ersten gewölbten Übergangsbereich zur Mantelfläche jeweils stetig.

Vorzugsweise, wenn man entlang der axialen Richtung der Walze von der Mitte der Walze aus zu einer Stirnseite hin die äußere Kontur der Walze betrachtet, bleibt der Durchmesser der äußeren Kontur der Walze gleich oder wird kleiner.

Vorzugsweise verläuft in einer Längsebene durch die Mittenachse der Walze betrachtet eine Steigung der Kontur der Walze am Übergang vom ersten stirnseitigen Bereich zum ersten gewölbten Übergangsbereich, innerhalb des ersten gewölbten Übergangsbereichs und am Übergang vom ersten gewölbten Übergangsbereich zur Mantelfläche jeweils monoton fallend oder monoton steigend.
Vorzugsweise bleibt in einer Längsebene durch die Mittenachse der Walze betrachtet das Vorzeichen der Krümmung der Kontur der Walze am Übergang vom ersten stirnseitigen Bereich zum ersten gewölbten Übergangsbereich, innerhalb des ersten gewölbten Übergangsbereichs und am Übergang vom ersten gewölbten Übergangsbereich zur Mantelfläche unverändert.
Vorzugsweise weist in einer Längsebene durch die Mittenachse der Walze betrachtet die Kontur der Walze innerhalb des ersten gewölbten Übergangsbereichs in jedem Punkt der Kontur eine Krümmung auf, die einem Krümmungsradius im Bereich zwischen 5% und 40% des Durchmessers der Mantelfläche der Walze entspricht.
Vorzugsweise ist in einer Längsebene durch die Mittenachse der Walze betrachtet eine Krümmung der Kontur der Walze am Übergang vom ersten stirnseitigen Bereich zum ersten Übergangsbereich, innerhalb des ersten gewölbten Übergangsbereichs und am Übergang vom ersten Übergangsbereich zur Mantelfläche in jedem Punkt der Kontur kleiner als eine maximale Krümmung, die gleich dem Kehrwert eines Krümmungsradius von 5% des Durchmessers der Mantelfläche der Walze ist.
Vorzugsweise weist in einer Längsebene durch die Mittenachse der Walze betrachtet die Kontur der Walze innerhalb des ersten gewölbten Übergangsbereichs in jedem Punkt der Kontur eine Krümmung auf, die innerhalb eines Bereichs liegt, der durch Kehrwerte des Krümmungsradius im Bereich von 5% bis 40% des Durchmessers der Mantelfläche der Walze gegeben ist.
Vorzugsweise ist die Krümmung innerhalb des ersten Übergangsbereichs durch einen einzigen Krümmungsradius gegeben, wobei dieser Krümmungsradius im Bereich zwischen 5% und 40% des Durchmessers der Mantelfläche der Walze liegt.
Vorzugsweise verläuft die Krümmung innerhalb des ersten gewölbten Übergangsbereichs stetig.

Vorzugsweise weist die Walze einen zweiten stirnseitigen Bereich auf, der in axialer Richtung betrachtet gegenüberliegend zum ersten stirnseitigen Bereich angeordnet ist, wobei der zweite stirnseitige Bereich der Walze einen Durchmesser aufweist, der kleiner als der Durchmesser der Walze ist, wobei die zweite axiale Position der Walze einen axialen Abstand zum Rand des zweiten stirnseitigen Bereichs aufweist, der zwischen 5% und 25% der Länge der Walze beträgt, wobei die Walze einen zweiten gewölbten Übergangsbereich aufweist, der sich vom Rand des zweiten stirnseitigen Bereichs ausgehend ringförmig in einem kontinuierlichen Verlauf bis zur zweiten axialen Position der Mantelfläche erstreckt, wobei in einer Längsebene durch die Mittenachse der Walze betrachtet eine Steigung einer Kontur der Walze am Übergang vom zweiten stirnseitigen Bereich zum zweiten gewölbten Übergangsbereich, innerhalb des zweiten gewölbten Übergangsbereichs und am Übergang vom zweiten gewölbten Übergangsbereich zur Mantelfläche jeweils stetig verläuft, und in einer Längsebene durch die Mittenachse der Walze betrachtet eine Krümmung der Kontur der Walze innerhalb des zweiten gewölbten Übergangsbereichs in jedem Punkt der Kontur kleiner als eine maximale Krümmung ist, die einem minimalen Krümmungsradius von 5% des Durchmessers der Walze entspricht.

Vorzugsweise ist der erste stirnseitige Bereich zur Mittenachse der Walze rotationssymmetrisch ausgebildet.
Vorzugsweise ist der zweite stirnseitige Bereich zur Mittenachse der Walze rotationssymmetrisch ausgebildet.

Vorzugsweise ist der erste stirnseitige Bereich als erste Stirnfläche der Walze ausgebildet, welche zur Mittenachse der Walze senkrecht ist.
Vorzugsweise ist der zweite stirnseitige Bereich als zweite Stirnfläche der Walze ausgebildet, welche zur Mittenachse der Walze senkrecht ist.
Vorzugsweise ist die Mittenachse der Walze als Drehachse der Walze ausgebildet. Vorzugsweise ist der erste gewölbte Übergangsbereich rotationssymmetrisch zu einer Mittenachse der Walze ausgebildet.
Vorzugsweise ist der erste gewölbte Übergangsbereich als konvex nach außen gewölbter Übergangsbereich ausgebildet.
Vorzugsweise ist der erste gewölbte Übergangsbereich ein ringförmig umlaufender, konvex nach außen gewölbter Übergangsbereich.
Vorzugsweise weist der erste stirnseitige Bereich einen Radius auf, der zwischen 30% und 47% des Durchmessers der Walze beträgt.
Vorzugsweise weist der zweite stirnseitige Bereich einen Radius auf, der zwischen 30% und 47% des Durchmessers der Walze beträgt.
Vorzugsweise ist die Walze als rotationssymmetrisches Bauteil ausgebildet.
Vorzugsweise ist die Walze rotationssymmetrisch um eine Drehachse der Walze ausgebildet.
Vorzugsweise handelt es sich bei der Walze um eine Kühlwalze für eine Elektronenbestrahlungsvorrichtung.
Vorzugsweise handelt es sich bei der Walze um eine Bahnführungswalze.
Vorzugsweise handelt es sich bei der Walze um eine Bahnführungswalze für eine Elektronenbestrahlungsvorrichtung.
Vorzugsweise ist an der Mantelfläche oder innerhalb der Mantelfläche eine Strahlungsabschirmung aus strahlungsabschirmendem Material zur Abschirmung von hochenergetischer Strahlung angeordnet.
Vorzugsweise ist an der Mantelfläche oder innerhalb der Mantelfläche eine Strahlungsabschirmung in Form eines Zylindermantels aus strahlungsabschirmendem Material zur Abschirmung von hochenergetischer Strahlung angeordnet.

Vorzugsweise weist die Mantelfläche der Walze einen Durchmesser von mehr als 15 cm auf. Vorzugsweise weist die Mantelfläche der Walze einen Durchmesser von weniger als 155 cm auf.
Vorzugsweise weist die Walze vom ersten stirnseitigen Bereich zum zweiten stirnseitigen Bereich eine Länge zwischen 40 cm und 3,80 m auf.

Vorzugsweise ist die Walze zur Bahnführung von Materialbahnen mit einer Breite zwischen 15 cm und 3,50 m ausgelegt.
Vorzugsweise weist die Mantelfläche der Walze eine Länge zwischen 20 cm und 3,60 m auf.

### Bestrahlungsvorrichtung mit drehbar gelagerter Walze

Vorzugsweise folgt eine der Walze zugewandte Innenwandung der Aufnahme zumindest in einem Teilbereich dem Verlauf des ersten gewölbten Übergangsbereichs der Walze. Vorzugsweise folgt eine der Walze zugewandte Innenwandung der Aufnahme zumindest in einem Teilbereich dem Verlauf des ersten gewölbten Übergangsbereichs der Walze, wobei ein Spaltbereich zwischen der Innenwandung der Aufnahme und dem ersten gewölbten Übergangsbereich ausgebildet ist.
Vorzugsweise folgt eine der Walze zugewandte Innenwandung der Aufnahme zumindest in einem Teilbereich dem Verlauf des ersten gewölbten Übergangsbereichs der Walze, wobei ein Spaltbereich zwischen der Innenwandung der Aufnahme und dem ersten gewölbten Übergangsbereich ausgebildet ist, wobei der Spaltbereich so dimensioniert ist, dass eine wirksame Strahlungsabschirmung erfolgt.
Vorzugsweise weist eine der Walze zugewandte Innenwandung der Aufnahme zumindest in einem Teilbereich eine zum ersten gewölbten Übergangsbereich der Walze komplementäre Form auf.
Vorzugsweise ist der erste gewölbte Übergangsbereich der Walze zumindest teilweise von der Aufnahme umgeben, die zumindest in einem Teilbereich eine zum ersten gewölbten Übergangsbereich komplementäre Form aufweist.
Vorzugsweise ist zumindest ein Teilbereich der Aufnahme als negative Hohlform zu zumindest einem Teilbereich des ersten gewölbten Übergangsbereichs der Walze ausgebildet.

Vorzugsweise weist die Walze am ersten axialen Ende der Walze ein erstes stirnseitiges Endprofil auf, das den ersten stirnseitigen Bereich und den ersten gewölbten Übergangsbereich umfasst.

Vorzugsweise, wenn man die äußere Kontur der Walze in axialer Richtung von der Mitte der Walze zu einer Stirnseite hin verfolgt, bleibt der Durchmesser der äußeren Kontur der Walze in axialer Richtung betrachtet gleich oder wird kleiner.

Vorzugsweise folgt eine der Walze zugewandte Innenwandung der Aufnahme zumindest in einem Teilbereich dem Verlauf des ersten stirnseitigen Endprofils der Walze.
Vorzugsweise folgt eine der Walze zugewandte Innenwandung der Aufnahme zumindest in einem Teilbereich dem Verlauf des ersten stirnseitigen Endprofils der Walze, wobei ein Spaltbereich zwischen der Innenwandung der Aufnahme und dem ersten stirnseitigen Endprofil der Walze ausgebildet ist.
Vorzugsweise folgt eine der Walze zugewandte Innenwandung der Aufnahme zumindest in einem Teilbereich dem Verlauf des ersten stirnseitigen Endprofils der Walze, wobei ein Spaltbereich zwischen der Innenwandung der Aufnahme und dem ersten stirnseitigen Endprofil der Walze ausgebildet ist, wobei der Spaltbereich so dimensioniert ist, dass eine wirksame Strahlungsabschirmung erfolgt.
Vorzugsweise weist eine der Walze zugewandte Innenwandung der Aufnahme zumindest in einem Teilbereich eine zum ersten stirnseitigen Endprofil der Walze komplementäre Form auf.
Vorzugsweise ist das erste stirnseitige Endprofil zumindest teilweise von der dazu komplementär geformten Aufnahme umschlossen.
Vorzugsweise ist das erste stirnseitige Endprofil der Walze zumindest teilweise von der Aufnahme umschlossen, die zumindest in einem Teilbereich eine zum ersten stirnseitigen Endprofil komplementäre Form aufweist.
Vorzugsweise ist zumindest ein Teilbereich einer der Walze zugewandten Innenwandung der Aufnahme als negative Hohlform zu zumindest einem Teilbereich des ersten stirnseitigen Endprofils der Walze ausgebildet.

Vorzugsweise weist die Aufnahme quer zur Mittenachse der Walze ein bogenförmiges Profil auf, wobei das bogenförmige Profil der Aufnahme dazu ausgelegt ist, einen Teilabschnitt der Walze zu umschließen.
Vorzugsweise erstreckt sich der mindestens eine Elektronenstrahler in axialer Richtung entlang eines der Walze zugewandten Bereichs der Aufnahme.
Vorzugsweise handelt es sich bei der Aufnahme um eine konkav geformte Aufnahme. Vorzugsweise ist die Walze an einer als Drehachse ausgebildeten Mittenachse drehbar gelagert.
Vorzugsweise ist innerhalb der Bestrahlungseinheit eine den mindestens einen Elektronenstrahler umgebende Strahlungsabschirmung vorgesehen.

Vorzugsweise verläuft mindestens eine Montagefläche der Bestrahlungseinheit im Wesentlichen in einer zur Mittenachse der Walze senkrechten Ebene.

Vorzugsweise umfasst die Bestrahlungsvorrichtung einen Abschirmblock zur Strahlungsabschirmung, wobei der Abschirmblock aufweist: eine Auflagefläche, über die der Abschirmblock an einer Montagefläche der Bestrahlungseinheit lösbar befestigbar ist, und eine im Abschirmblock vorgesehene Ausnehmung, wobei zumindest ein Teilbereich der Ausnehmung als negative Hohlform zu zumindest einem Teilbereich des ersten gewölbten Übergangsbereichs der Walze ausgebildet ist.

### Bestrahlungsvorrichtung mit mindestens einem Abschirmblock

Vorzugsweise folgt die Ausnehmung zumindest in einem Teilbereich dem Verlauf des konvex gewölbten Bereichs.
Vorzugsweise folgt die Ausnehmung zumindest in einem Teilbereich dem Verlauf des konvex gewölbten Bereichs, wobei ein Spaltbereich zwischen der Ausnehmung und dem konvex gewölbten Bereich ausgebildet ist.
Vorzugsweise folgt die Ausnehmung zumindest in einem Teilbereich dem Verlauf des konvex gewölbten Bereichs, wobei ein Spaltbereich zwischen der Ausnehmung und dem konvex gewölbten Bereich ausgebildet ist, wobei der Spaltbereich so dimensioniert ist, dass eine wirksame Strahlungsabschirmung erfolgt.
Vorzugsweise weist die Ausnehmung zumindest in einem Teilbereich eine zum konvex gewölbten Bereich komplementäre Form auf.
Vorzugsweise ist der konvex gewölbte Bereich zumindest teilweise von der Ausnehmung umgeben, die zumindest in einem Teilbereich eine zum konvex gewölbten Bereich komplementäre Form aufweist.
Vorzugsweise ist die Ausnehmung dazu ausgelegt, das erste stirnseitige Endprofil der Walze zumindest teilweise zu umschließen, wenn der Abschirmblock an der Montagefläche befestigt ist.

Vorzugsweise folgt die Ausnehmung zumindest in einem Teilbereich dem Verlauf des ersten stirnseitigen Endprofils der Walze.

Vorzugsweise folgt die Ausnehmung zumindest in einem Teilbereich dem Verlauf des ersten stirnseitigen Endprofils der Walze, wobei ein Spaltbereich zwischen der Innenwandung der Ausnehmung und dem ersten stirnseitigen Endprofil der Walze ausgebildet ist. Vorzugsweise folgt die Ausnehmung zumindest in einem Teilbereich dem Verlauf des ersten stirnseitigen Endprofils der Walze, wobei ein Spaltbereich zwischen der Innenwandung der Ausnehmung und dem ersten stirnseitigen Endprofil der Walze ausgebildet ist, wobei der Spaltbereich so dimensioniert ist, dass eine wirksame Strahlungsabschirmung erfolgt. Vorzugsweise folgt die Ausnehmung zumindest in einem Teilbereich dem Verlauf des ersten stirnseitigen Endprofils der Walze, wobei ein Spaltbereich zwischen der Innenwandung der Ausnehmung und dem ersten stirnseitigen Endprofil der Walze ausgebildet ist, wobei der Spaltbereich eine im Wesentlichen homogene Spaltbreite aufweist.
Vorzugsweise weist die Ausnehmung zumindest in einem Teilbereich eine zum ersten stirnseitigen Endprofil der Walze komplementäre Form auf.
Vorzugsweise ist die Ausnehmung als negative Hohlform zu zumindest einem Teilbereich des ersten stirnseitigen Endprofils der Walze ausgebildet.
Vorzugsweise ist das erste stirnseitige Endprofil der Walze zumindest teilweise von der dazu komplementär geformten Ausnehmung umschlossen, wenn der Abschirmblock an der Montagefläche befestigt ist.
Vorzugsweise ist die Ausnehmung dazu ausgelegt, zumindest einen Teil des ersten stirnseitigen Endprofils der Walze aufzunehmen, wenn der Abschirmblock an der Montagefläche befestigt ist.
Vorzugsweise ist die Ausnehmung so ausgebildet, dass sich, wenn der Abschirmblock an der Montagefläche befestigt ist, zumindest ein Teil des ersten stirnseitigen Endprofils der Walze in die Ausnehmung hinein erstreckt.
Vorzugsweise weist die Bestrahlungsvorrichtung mindestens einen weiteren Abschirmblock auf.

Vorzugsweise weist das erste stirnseitige Endprofil der Walze eine rotationssymmetrisch geformte Außenfläche auf.
Vorzugsweise ist das erste stirnseitige Endprofil der Walze rotationssymmetrisch ausgebildet.
Vorzugsweise ist der konvex gewölbte Bereich ein ringförmig umlaufender, konvex nach außen gewölbter Bereich des ersten stirnseitigen Endprofils.

Vorzugsweise ist der konvex gewölbte Bereich ein ringförmig umlaufender, konvex nach außen gewölbter Bereich des ersten stirnseitigen Endprofils, der rotationssymmetrisch zur Drehachse der Walze ausgebildet ist.
Vorzugsweise umfasst das erste stirnseitige Endprofil den konvex gewölbten Bereich sowie einen ersten stirnseitigen Bereich der Walze.
Vorzugsweise umfasst das erste stirnseitige Endprofil den konvex gewölbten Bereich sowie einen ersten stirnseitigen Bereich der Walze, wobei der konvex gewölbte Bereich einen Übergang von dem ersten stirnseitigen Bereich der Walze zur Mantelfläche der Walze bildet.

Vorzugsweise, wenn man entlang der axialen Richtung der Walze von der Mitte der Walze aus zu einer Stirnseite hin die äußere Kontur der Walze betrachtet, bleibt der Durchmesser der äußeren Kontur der Walze gleich oder wird kleiner.

Vorzugsweise ist in axialer Richtung gegenüberliegend zum ersten stirnseitigen Endprofil ein zweites stirnseitiges Endprofil an einem zweiten axialen Ende der Walze angeordnet und die Mantelfläche der Walze erstreckt sich von dem ersten stirnseitigen Endprofil zu dem zweiten stirnseitigen Endprofil in axialer Richtung.

Vorzugsweise handelt es sich bei der Walze um eine Walze wie weiter oben beschrieben.

Vorzugsweise umfasst die Bestrahlungsvorrichtung einen Walzenstuhl, in dem die Walze drehbar gelagert ist.
Vorzugsweise umfasst die Bestrahlungsvorrichtung einen Walzenstuhl, in dem die Walze drehbar gelagert ist, wobei der Walzenstuhl mit der Walze und die Bestrahlungseinheit relativ zueinander bewegbar sind.
Vorzugsweise umfasst die Bestrahlungsvorrichtung einen Walzenstuhl, in dem die Walze drehbar gelagert ist, wobei der Walzenstuhl mit der Walze und die Bestrahlungseinheit relativ zueinander bewegbar sind, wobei die Bestrahlungseinheit relativ zum Walzenstuhl in eine offene Position und in eine geschlossene Position bewegbar ist, wobei in der geschlossenen Position der mindestens eine Elektronenstrahler relativ zur Walze so positioniert ist, dass eine über die Walze geführte Materialbahn bestrahlt werden kann, und wobei in der offenen Position ein Zugang zur Walze ermöglicht ist.

Vorzugsweise ist an einer Montagefläche der Bestrahlungseinheit an dem der Walze zugewandten Bereich eine um einen Teil der Walze umlaufende Vertiefung ausgebildet.

Vorzugsweise ist an einer Montagefläche der Bestrahlungseinheit an dem der Walze zugewandten Bereich eine um einen Teil der Walze umlaufende Vertiefung ausgebildet, wobei in die Vertiefung ein oder mehrere bogenförmige Bleche einsetzbar sind. Vorzugsweise ist an einer Montagefläche der Bestrahlungseinheit an dem der Walze zugewandten Bereich eine um einen Teil der Walze umlaufende Vertiefung ausgebildet, wobei in die Vertiefung ein Stapel von mehreren bogenförmigen Blechen übereinander einsetzbar ist.
Vorzugsweise ist an einer Montagefläche der Bestrahlungseinheit an dem der Walze zugewandten Bereich eine um einen Teil der Walze umlaufende Vertiefung ausgebildet, wobei in die Vertiefung ein oder mehrere bogenförmige Bleche einsetzbar sind, wobei die ein oder mehreren bogenförmigen Bleche zur Gasabdichtung zwischen der Bestrahlungseinheit und der Walze ausgebildet sind.

Vorzugsweise ist der Abschirmblock zumindest teilweise aus einem strahlungsabschirmenden Material gebildet.
Vorzugsweise sind innerhalb des Abschirmblocks Abschirmeinsätze aus einem Abschirmmaterial angeordnet.
Vorzugsweise erstrecken sich von der Ausnehmung des Abschirmblocks aus Aussparungen in das Innere des Abschirmblocks, in die Abschirmeinsätze aus einem Abschirmmaterial einsetzbar sind oder in die geschmolzenes Abschirmmaterial einbringbar ist.
Vorzugsweise ist der Abschirmblock aus mehreren in axialer Richtung aufeinanderfolgenden Scheibenelementen aufgebaut, wobei mindestens ein Scheibenelement eine oder mehrere Aussparungen für einen oder mehrere Abschirmeinsätze aufweist.

Vorzugsweise erstreckt sich die Montagefläche der Bestrahlungseinheit im Wesentlichen in einer Ebene, die gegenüber einer zur Mittenachse der Walze senkrechten Ebene um einen Winkel zwischen 0° und 60° geneigt ist.
Vorzugsweise erstreckt sich die Montagefläche der Bestrahlungseinheit im Wesentlichen in einer zur Mittenachse der Walze senkrechten Ebene.
Vorzugsweise erstreckt sich die Auflagefläche des Abschirmblocks, wenn der Abschirmblock an der Montagefläche der Bestrahlungseinheit befestigt ist, in der durch die Montagefläche der Bestrahlungseinheit vorgegebenen Richtung.
Vorzugsweise erstreckt sich die Auflagefläche des Abschirmblocks, wenn der Abschirmblock an der Montagefläche der Bestrahlungseinheit befestigt ist, in einer zur Mittenachse der Walze senkrechten Ebene.

Vorzugsweise deckt der Abschirmblock in Richtung der Mittenachse der Walze betrachtet zumindest einen Teil des Querschnitts der Walze ab.
Vorzugsweise deckt der Abschirmblock in Richtung der Mittenachse der Walze betrachtet zumindest 30% des Querschnitts der Walze ab.
Vorzugsweise deckt der Abschirmblock in Richtung der Mittenachse der Walze betrachtet zumindest 50% des Querschnitts der Walze ab.
Vorzugsweise deckt der Abschirmblock in Richtung der Mittenachse der Walze betrachtet einen Spalt zwischen der Walze und der Aufnahme der Bestrahlungseinheit ab. Vorzugsweise ist der Abschirmblock mittels Befestigungselementen an einer Montagefläche der Bestrahlungseinheit lösbar befestigbar.
Vorzugsweise ist der Abschirmblock mittels Befestigungselementen an einer Montagefläche der Bestrahlungseinheit lösbar befestigbar, wobei ein Abstand zwischen dem ersten stirnseitigen Endprofil der Walze und der Innenwandung der Ausnehmung mittels der Befestigungselemente einstellbar ist.
Vorzugsweise ist der Abschirmblock mittels Befestigungselementen an einer Montagefläche der Bestrahlungseinheit lösbar befestigbar, wobei die Position des Abschirmblocks relativ zu der Montagefläche mittels der Befestigungselemente einstellbar ist.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1a: zeigt eine Bestrahlungsvorrichtung, die eine Bahnführungswalze und eine Bestrahlungseinheit umfasst, in einer geschlossenen Position.
- Figur 1b: zeigt die Bestrahlungsvorrichtung von Figur 1a in einer offenen Position.
- Figur 2: zeigt einen Längsschnitt durch die Walze und die Bestrahlungseinheit.
- Figur 3: zeigt einen Querschnitt durch die Walze und die Bestrahlungseinheit.
- Figur 4: zeigt einen Längsschnitt durch eine Walze und eine Bestrahlungseinheit gemäß dem Stand der Technik.
- Figur 5: zeigt einen Querschnitt durch die Walze und die Bestrahlungseinheit von Figur 4.
- Figur 6: zeigt einen Längsschnitt durch die gesamte Walze, wobei der Längsschnitt durch die Mittenachse der Walze hindurch verläuft.
- Figur 7a: zeigt die lösbare Anbringung von zwei Abschirmblöcken an den Seitenwänden der Bestrahlungseinheit.
- Figur 7b: zeigt die Bestrahlungsvorrichtung im fertig montierten Zustand.
- Figur 8: zeigt eine Schrägbildansicht eines Abschirmblocks, der eine Ausnehmung zur Aufnahme eines Teils des stirnseitigen Innenprofils der Walze aufweist.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

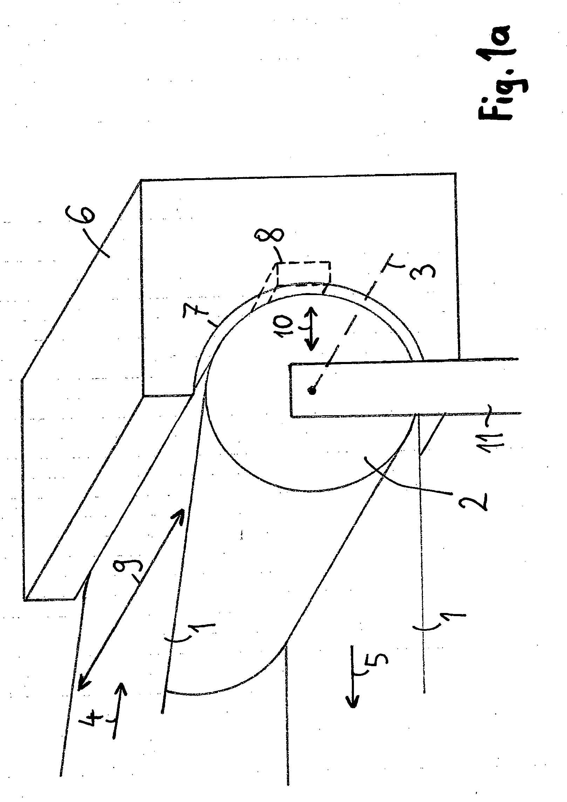

Figur 1a zeigt eine Bestrahlungsvorrichtung für die Bestrahlung einer Materialbahn 1 mit Elektronen, wobei die Bestrahlungsvorrichtung eine offene Walzenführung aufweist. Die Bestrahlungsvorrichtung umfasst eine Walze 2, die um eine in Längsrichtung verlaufende Drehachse 3 drehbar gelagert ist. Über die Mantelfläche der Walze 2 kann die Materialbahn 1 in Richtung der Pfeile 4 und 5 durch die Bestrahlungsvorrichtung geführt werden. Die Bestrahlungsvorrichtung umfasst eine Bestrahlungseinheit 6 mit einer Aufnahme 7 für die Walze 2. Die Aufnahme 7 erstreckt sich in Längsrichtung der Walze 2 und umschließt einen Abschnitt der Mantelfläche der Walze 2. Dabei umschließt die Aufnahme 7 die Walze 2 teilweise, wobei die Innenfläche der Aufnahme 7 komplementär geformt zur Mantelfläche der Walze 2 ausgebildet ist, wobei zwischen der Walze 2 und der Aufnahme 7 ein Spalt ausgebildet wird. Insofern ist die Innenfläche der Aufnahme 7 als Abschnitt eines Zylindermantels mit etwas größerem Durchmesser als dem Durchmesser der Walze 2 ausgebildet. Die Innenfläche der Aufnahme 7 umgibt die Mantelfläche der Walze 2 über einen gewissen Winkel α hinweg, wobei der Winkel α im Beispiel von Figur 1a etwa 180° beträgt. Vorzugsweise ist der Winkel α größer als 90°, weiter vorzugsweise größer als 135°. Vorzugsweise ist der Winkel α kleiner als 270°, weiter vorzugsweise kleiner als 225°. In einer Querebene senkrecht zur Drehachse 3 betrachtet weist die Aufnahme 7 einen kreisbogenförmigen Verlauf auf. Die Bestrahlungseinheit 6 umfasst mindestens einen Elektronenstrahler 8 zur Erzeugung von Elektronen mit einer Energie im Bereich von etwa 100 bis 300 keV, wobei das mindestens eine Austrittsfenster des mindestens einen Elektronenstrahlers 8 an der Innenfläche der Aufnahme 7 angeordnet ist. Vorzugsweise erstreckt sich das bzw. die Elektronenaustrittsfenster des mindestens einen Elektronenstrahlers 8 in Längsrichtung der Walze 2. Dabei ist der mindestens eine Elektronenstrahler 8 dazu ausgelegt, möglichst die gesamte Bahnbreite 9 der Materialbahn 1 mit Elektronen bestrahlen zu können.

Die Bahn 1 kann beispielsweise eine Bahn aus Papier oder Pappe, eine Kunststofffolie, eine Metallfolie, ein Laminatmaterial, eine bedruckte Materialbahn etc. sein. Die Bahnbreite 9 der Materialbahn 1 liegt vorzugsweise im Bereich zwischen 15 cm und 3,50 m. Um die Materialbahn 1 durch die Bestrahlungsvorrichtung führen zu können, weist die Mantelfläche der Walze 2 eine Länge zwischen 20 cm und 3,60 m auf, wobei die Walze 2 von der ersten zur zweiten Stirnseite eine Länge zwischen beispielsweise 40 cm und 3,80 m aufweist. Die Länge der Walze 2 ist also etwas größer als die Breite der zu bestrahlenden Materialbahn gewählt. Die Walze weist vorzugsweise einen Durchmesser von mehr als 15 cm auf. Die Walze weist vorzugsweise einen Durchmesser von weniger als 155 cm auf.

Wenn die Walze 2 um die Drehachse 3 rotiert, wird die Materialbahn 1 in Richtung des Pfeils 4 in die Bestrahlungsvorrichtung eingeführt. Die Materialbahn 1 wird über die Mantelfläche der Walze 2 durch die Aufnahme 7 geführt und dabei mit von dem mindestens einen Elektronenstrahler 8 erzeugten Elektronen bestrahlt. Die bestrahle Materialbahn wird an der Unterseite der Aufnahme 7 in Richtung des Pfeils 5 aus der Bestrahlungsvorrichtung herausgeführt. Zum Erzielen guter Bestrahlungsergebnisse wird der Spalt zwischen der Oberfläche der Walze 2 und der Innenfläche der Aufnahme 7 vorzugsweise evakuiert oder mit einem Inertgas wie beispielsweise Argon gefüllt.

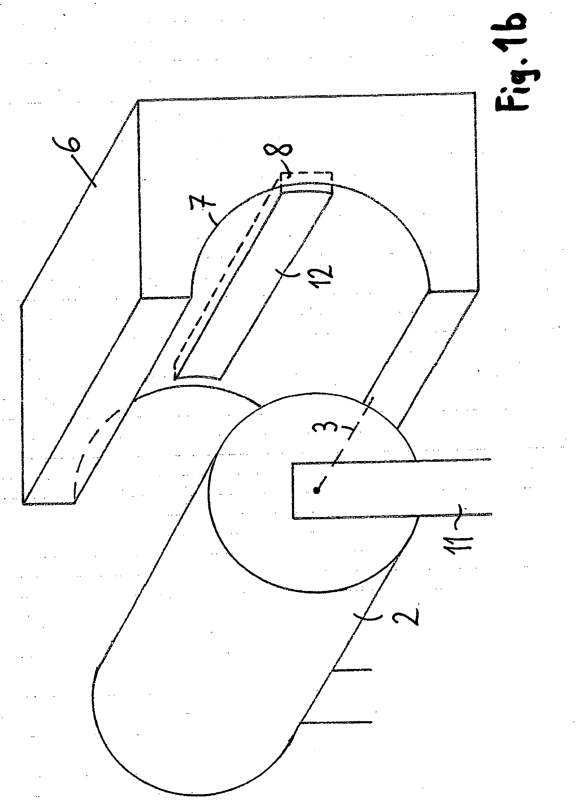

Die in Figur 1a gezeigte offene Walzenführung bietet eine Reihe von Vorteilen. Ein wichtiger Vorteil ist, dass die Bahnoberfläche zugänglich bleibt und während des laufenden Betriebs inspiziert werden kann. Wenn Probleme auftreten, können nach dem Ausschalten des mindestens einen Elektronenstrahlers 8 der Walzenstuhl der Walze 2 und die Bestrahlungseinheit 6 relativ zueinander in Richtung des Doppelpfeils 10 verfahren werden. Auf diese Weise wird die Bestrahlungsvorrichtung in die in Figur 1b gezeigte geöffnete Position überführt, bei der die Bestrahlungseinheit 6 mit dem mindestens einen Elektronenstrahler 8 beabstandet zur Walze 2 und zu dem die Walze tragenden Walzenstuhl 11 angeordnet ist. Im geöffneten Zustand der Bestrahlungsvorrichtung kann die Materialbahn 1 inspiziert und neu justiert werden; außerdem ist ein Zugang zu dem mindestens einen Elektronenaustrittsfenster 12 des mindestens einen Elektronenstrahlers 8 möglich. Die offene Walzenstruktur ermöglicht daher eine vereinfachte Wartung und eine komfortable Bedienung der Bestrahlungsvorrichtung. Darüber hinaus ermöglicht das Zusammenwirken zwischen der Walze 2 und der die Walze teilweise umschließenden Aufnahme 7 eine wirksame Strahlungsabschirmung der entstehenden Röntgenstrahlung.

Während der Bestrahlung der Materialbahn 1 mit beschleunigten Elektronen werden die beschleunigten Elektronen beim Auftreffen auf der Materialbahn 1 der Walze 2 oder der die Walze 2 umschließenden Aufnahme 7 abgebremst, wobei beim Abbremsen der Elektronen sekundäre Röntgenstrahlung entsteht. Die in Figur 1a gezeigte offene Walzenstruktur, bei der die Walze 2 über einen gewissen Winkelbereich ihres Querschnitts hinweg von der Aufnahme 7 umschlossen wird, dient dabei als Strahlungsabschirmung. Hierzu ist an oder unterhalb der Mantelfläche der Walze 2 ein strahlungsabschirmendes Material wie beispielsweise Blei in die Walze 2 integriert, welches die entstehende Röntgenstrahlung absorbiert und die erforderliche Strahlungsabschirmung bereitstellt. Darüber hinaus ist auch die Aufnahme 7 an ihrer Innenfläche mit strahlungsabsorbierendem Material wie beispielsweise Blei ausgekleidet, sodass auftreffende Röntgenstrahlung abgeschirmt wird und nicht nach draußen dringen kann. Allerdings kann Röntgenstrahlung an den Stirnseiten der Bestrahlungsvorrichtung aus dem Spalt zwischen der Aufnahme 7 und der Oberfläche der Walze 2 austreten. Zum Schutz des Bedienpersonals muss daher zusätzlich zur Strahlungsabschirmung der Walzenoberfläche und der Aufnahme 7 außerdem an den Stirnseiten der Bestrahlungsvorrichtung an dem bogenförmigen Walzenspalt eine Strahlungsabschirmung vorgesehen werden. Im Folgenden soll beschrieben werden, wie eine derartige Strahlungsabschirmung an den Stirnseiten der Bestrahlungsvorrichtung realisiert werden kann.

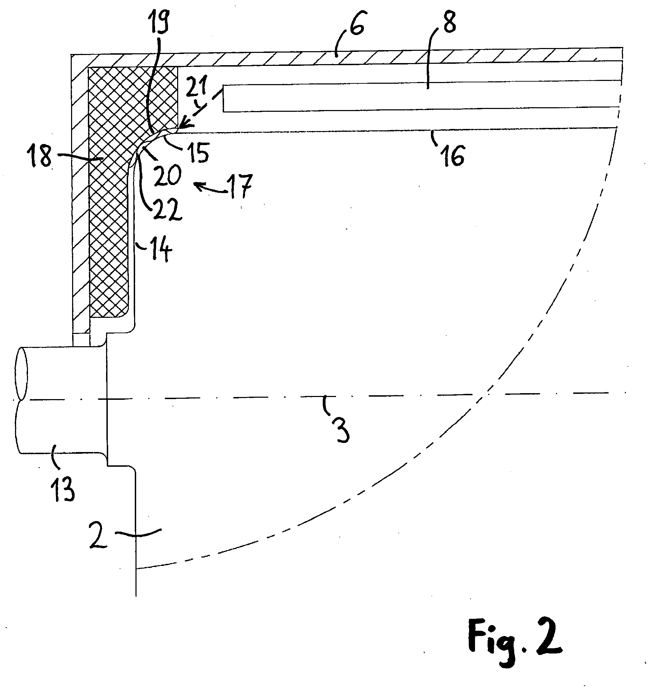

In Figur 2 ist eine Strahlungsabschirmung für den bogenförmigen Walzenspalt gemäß den Ausführungsformen der Erfindung gezeigt. Hierzu ist in Figur 2 ein Längsschnitt durch die Walze 2 gezeigt, wobei der Schnitt durch die Drehachse 3 hindurch verläuft. In der Schnittdarstellung von Figur 2 ist auch ein Elektronenstrahler 8 zu erkennen. Die Walze 2 wird durch eine Antriebswelle 13 angetrieben, welche die Walze 2 um die Drehachse 3 in rotierende Bewegung versetzt. Die Walze 2 weist eine Stirnfläche 14 auf, die sich im Wesentlichen senkrecht zur Drehachse 3 erstreckt. An die Stirnfläche 14 schließt sich ein konvex gewölbter, rotationssymmetrisch ausgebildeter Übergangsbereich 15 an, der zwischen der Stirnfläche 14 und der Mantelfläche 16 einen gewölbten Übergang bildet. Insofern umfasst das stirnseitige Endprofil 17 der Walze 2 sowohl die Stirnfläche 14 als auch den gewölbten Übergangsbereich 15.

Zur Strahlungsabschirmung ist an der Bestrahlungseinheit 6 ein stirnseitiger Abschirmblock 18 lösbar angebracht, der eine Ausnehmung 19 aufweist, wobei sich das stirnseitige Endprofil 17 der Walze 2 in die Ausnehmung 19 hinein erstreckt. Dabei ist die Innenfläche der Ausnehmung 19 komplementär zur Form der Stirnfläche 14 und des gewölbten Übergangsbereichs 15 ausgebildet. Wenn sich das stirnseitige Endprofil 17 in die Ausnehmung 19 hinein erstreckt und von der Ausnehmung 19 umfasst wird, wird zwischen dem stirnseitigen Endprofil 17 und der dazu komplementär geformten Ausnehmung 19 ein vergleichsweise schmaler Spaltbereich 20 ausgebildet. Der Spaltbereich 20 weist vorzugsweise eine Spaltbreite von mehr als 1 mm auf, weiter vorzugsweise von mehr als 3 mm auf. Der Spaltbereich 20 weist vorzugsweise eine Spaltbreite von weniger als 10 mm, weiter vorzugsweise von weniger als 7 mm auf. Der Spaltbereich 20 dient zur Abschirmung der bei der Elektronenbestrahlung entstehenden Röntgenstrahlung. Wenn die Röntgenstrahlung in Richtung des Pfeil 21 in den Spaltbereich 20 zwischen dem stirnseitigen Abschirmblock 18 und dem stirnseitigen Endprofil 17 eintritt, wird die Röntgenstrahlung innerhalb des Spaltbereichs 20 mehrfach gebrochen und dadurch so abgeschwächt, dass keine Röntgenstrahlung nach außen dringen kann. Dabei wird insbesondere zwischen dem gewölbten Übergangsbereich 15 und der komplementär dazu geformten Ausnehmung 19 eine deutliche Abschwächung der Röntgenstrahlung erzielt.

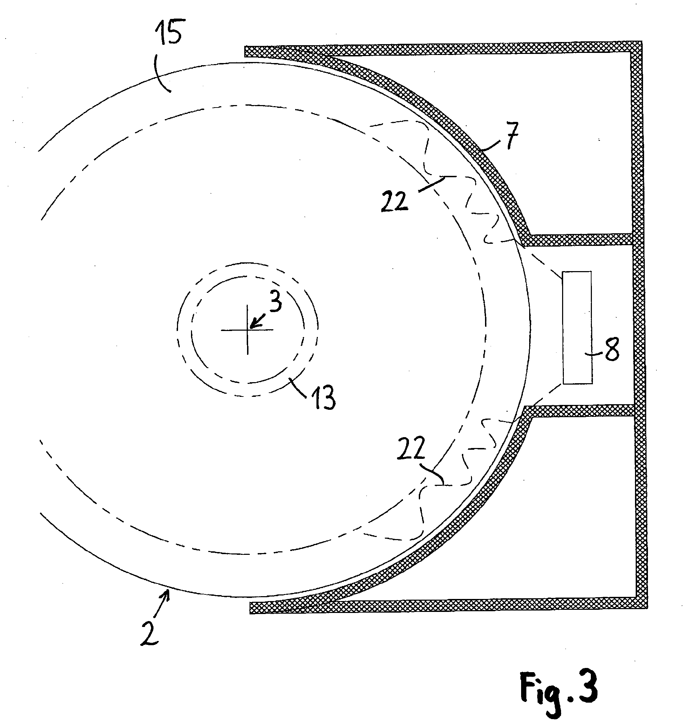

In Figur 3 sind die Walze 2 und die Bestrahlungseinheit 6 im Querschnitt gezeigt, wobei die erfindungsgemäße Abschirmung der Röntgenstrahlung an der Stirnseite der Walze 2 erkennbar ist. Im Querschnitt von Figur 3 ist die Walze 2 mit der Antriebswelle 13 und der Drehachse 3 zu erkennen. Außerdem sind in Figur 3 die Aufnahme 7 und der mindestens eine Elektronenstrahler 8 zu erkennen, wobei die Aufnahme 7 die Mantelfläche der Walze 2 teilweise umschließt. Bei der Abbremsung von Elektronen, die durch den mindestens einen Elektronenstrahler 8 erzeugt werden, entsteht Röntgenstrahlung, die in den Spaltbereich 20 eintritt und dann entsprechend dem gestrichelt eingezeichneten Pfad 22 zwischen dem gekrümmten Übergangsbereich 15 der Walze 2 und der Ausnehmung 19 des stirnseitigen Abschirmblocks 18 mehrfach gebrochen und dadurch deutlich abgeschwächt wird.

Dabei wird gerade durch das Zusammenwirken des konvex gewölbten Übergangsbereich 15 mit der dazu komplementären konkaven Krümmung der Ausnehmung 19 eine wirksame Abschirmung der Röntgenstrahlung erzielt.

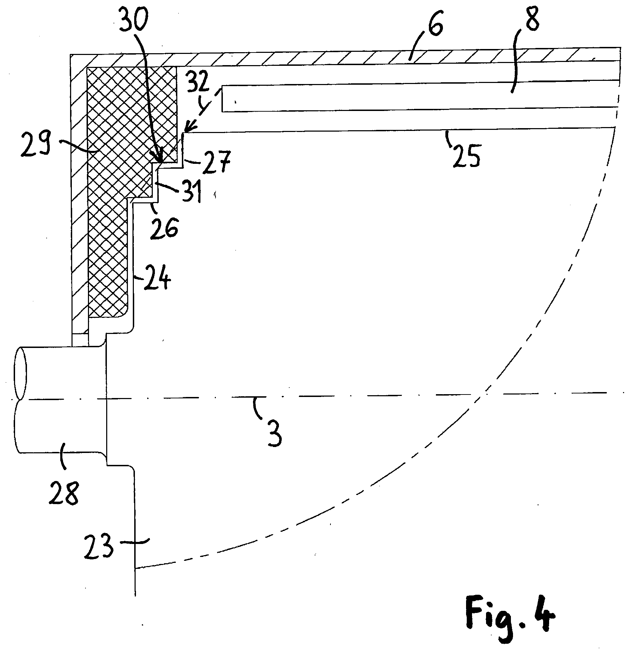

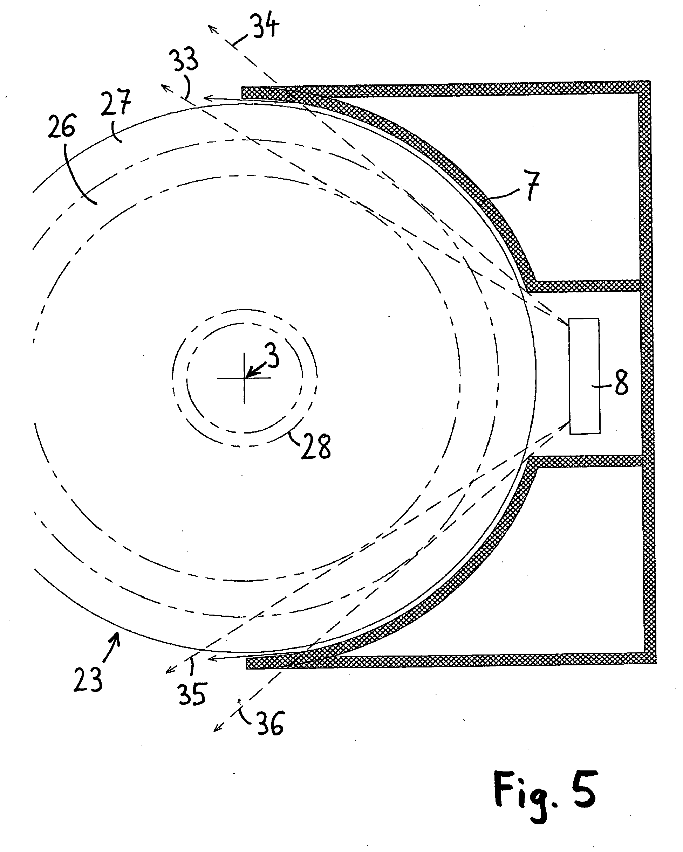

Dies ergibt sich insbesondere aus einem Vergleich mit dem in Figur 4 gezeigten Beispiel. In Figur 4 ist eine Walze 23 gezeigt, bei der im Übergangsbereich zwischen der Stirnfläche 24 und der Mantelfläche 25 zur Strahlungsabschirmung mehrere umlaufende Stufen vorgesehen sind, beispielsweise eine, zwei, drei oder vier umlaufende Stufen. Im Beispiel von Figur 4 sind zwei umlaufende Stufen vorgesehen, eine erste umlaufende Stufe 26 und eine zweite umlaufende Stufe 27. Die Walze 23 kann um die Drehachse 3 rotieren, wobei die Walze 23 über die Antriebswelle 28 angetrieben wird. Die Bestrahlungseinheit 6 umfasst zur Strahlungsabschirmung ein stirnseitiger Abschirmblock 29 mit einem abgestuften Profil 30, das komplementär zu der ersten umlaufenden Stufe 26 und der zweiten umlaufenden Stufe 27 der Walze 23 ausgebildet ist, sodass das abgestufte Profil 30 mit den beiden umlaufenden Stufen 26 und 27 im Eingriff steht. Dadurch entsteht zwischen dem stirnseitigen Endprofil der Walze 23 und dem Abschirmblock 29 ein Spaltbereich 31. In Figur 4 hat es den Anschein, als ob die in Richtung des Pfeils 32 emittierte Röntgenstrahlung durch den Abschirmblock 29 und die Walze 23 vollständig abgeschirmt werden könnte. Die Querschnittsdarstellung von Figur 5 zeigt jedoch, dass dies nicht der Fall ist. In Figur 5 ist die um die Drehachse 3 rotierbare Walze 23 im Querschnitt gezeigt, wobei die Mantelfläche der Walze 23 zum Teil durch die Aufnahme 7 umschlossen wird. Der in der Aufnahme 7 angeordnete mindestens eine Elektronenstrahler 8 ist dazu ausgelegt, Elektronen zur Bestrahlung der über die Walze 23 geführten Materialbahn zu erzeugen. Beim Abbremsen dieser Elektronen entsteht hochenergetische Röntgenstrahlung, die unter anderem in den in Figur 5 gestrichelt eingezeichneten Richtungen 33, 34, 35 und 36 emittiert wird. Wie anhand von Figur 5 zu erkennen ist, kann die Röntgenstrahlung insbesondere innerhalb der radialen Abschnitte des Spaltbereichs 31, also entlang der Stirnseiten der ersten umlaufenden Stufe 26 und der zweiten umlaufenden Stufe 27 ungehindert aus der Bestrahlungsvorrichtung austreten. Wegen dieser Möglichkeit der Durchstrahlung weist die in den Figuren 4 und 5 gezeigte Abschirmung Lücken auf. Diese Lücken können durch die in Figur 2 gezeigte konvex nach außen gewölbte Ausbildung des Übergangsbereichs 15 der Walze 2 und die daraus resultierende gewölbte Ausbildung des Spaltbereichs 20 vermieden werden. Wie insbesondere anhand von Figur 2 und Figur 3 erkennbar ist, ist bei einer derartigen gewölbten Ausbildung des Spaltbereichs 20 ein direkter Durchtritt der Röntgenstrahlung durch den Spaltbereich 20 nach außen nicht mehr möglich, sodass eine wirksame Abschirmung der Röntgenstrahlung erzielt wird.

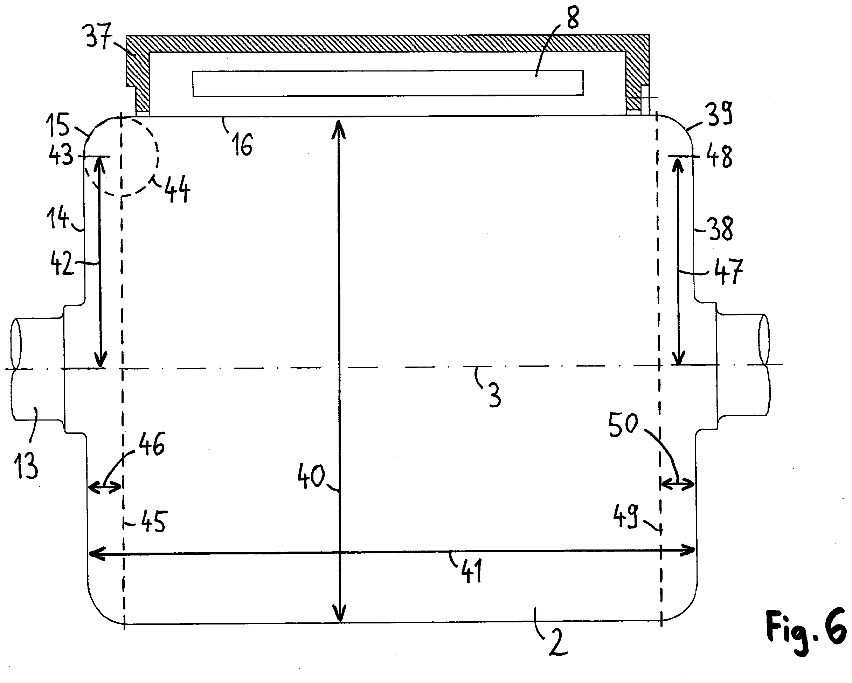

Anhand von Figur 6 sollen im Folgenden die Proportionen und Abmessungen der Walze 2 erläutert werden. Figur 6 zeigt einen Längsschnitt durch die Walze 2, welcher durch die Drehachse 3 hindurch verläuft. Dabei kann die Walze 2 über die Antriebswelle 13 um die Drehachse 3 rotierend angetrieben werden. Darüber hinaus ist in Figur 6 auch eine Bestrahlungseinheit 37 gezeigt, die mindestens einen Elektronenstrahler 8 umfasst.

Wie bereits anhand von Figur 2 erläutert wurde, weist die Walze 2 einen ersten stirnseitigen Bereich 14 auf, an den sich ein erster gewölbter Übergangsbereich 15 anschließt. Der erste gewölbte Übergangsbereich 15 bildet einen Übergang zwischen dem ersten stirnseitigen Bereich 14 und der Mantelfläche 16 der Walze 2. In Richtung der Drehachse 3 betrachtet ist gegenüberliegend zum ersten stirnseitigen Bereich 14 der zweite stirnseitige Bereich 38 vorgesehen. An den zweiten stirnseitigen Bereich 38 schließt sich der zweite gewölbte Übergangsbereich 39 an, der den Übergang zwischen dem zweiten stirnseitigen Bereich 38 und der Mantelfläche 16 der Walze 2 bildet. Die Mantelfläche 16 ist als Mantelfläche eines Kreiszylinders des Durchmessers D ausgebildet und ist dazu vorgesehen, das zu bestrahlende Bahnmaterial durch die Bestrahlungsvorrichtung zu führen. Dabei liegt der Durchmesser D beispielsweise im Bereich zwischen 15 cm und 155 cm. In Figur 6 ist der Durchmesser D der Walze 2 durch den Doppelpfeil 40 dargestellt. Die Länge L der Walze 2 erstreckt sich vom ersten stirnseitigen Bereich 14 in axialer Richtung zum zweiten stirnseitigen Bereich 38. Die Länge L kann beispielsweise im Bereich zwischen 40 cm und 3,8 m liegen. In Figur 6 ist die Länge L durch den Doppelpfeil 41 dargestellt.

Der erste stirnseitige Bereich 14 der Walze 2 weist an seinem kreisförmig umlaufenden Rand einen Radius R₁ auf, der vorzugsweise im Bereich zwischen 30% und 47% des Durchmessers D liegt. Der Radius R₁ erstreckt sich bis zum kreisförmig umlaufenden Rand des ersten stirnseitigen Bereichs 14. Der Radius R₁ ist in Figur 6 durch den Doppelpfeil 42 veranschaulicht. Der erste stirnseitige Bereich 14 endet daher bereits bei der ersten radialen Position 43, an der sich der erste gewölbte Übergangsbereich 15 anschließt. Dabei verläuft die Steigung der Kontur der Walze am Übergang vom ersten stirnseitigen Bereich 14 zum ersten gewölbten Übergangsbereich 15 stetig.

Im Längsschnitt betrachtet weist die Kontur der Walze 2 am Übergang vom ersten stirnseitigen Bereich 14 zum ersten gewölbten Übergangsbereich 15, innerhalb des ersten gewölbten Übergangsbereichs 15 und am Übergang vom ersten gewölbten Übergangsbereich 15 zur Mantelfläche 16 eine Krümmung auf, die kleiner ist als eine vorgegebene maximale Krümmung, sodass scharfe Kanten der Kontur vermieden werden. Die Krümmung κ der Kontur an einem bestimmten Punkt ist dabei durch den Kehrwert des Krümmungsradius an diesem Punkt gegeben: κ = 1 / r_{κ}. wobei r_{κ} den Radius des Krümmungskreises bezeichnet. Die vorgegebene maximale Krümmung κ der Kontur entspricht einem minimalen Krümmungsradius r_{κ}. Dabei beträgt der minimale Krümmungsradius r_{κ} vorzugsweise 5% des Durchmessers D. Vorzugsweise liegt der Krümmungsradius an jedem Punkt der Kontur innerhalb des ersten gewölbten Übergangsbereichs 15 über dem minimalen Krümmungsradius r_{κ}, der 5% des Durchmessers D beträgt. Weiter vorzugsweise liegt der Krümmungsradius an jedem Punkt der Kontur innerhalb des Übergangsbereichs 15 im Bereich zwischen 5% und 40% des Durchmessers D. Bei dem in Figur 6 gezeigten Beispiel ist die Krümmung innerhalb des gesamten Übergangsbereichs konstant, wobei die Krümmung im gesamten ersten Übergangsbereich 15 durch den Krümmungsradius des gestrichelt einzeichneten Kreises 44 gegeben ist. Es wäre jedoch ebenso gut möglich, dass die Krümmung innerhalb des Übergangsbereichs 15 variiert, wobei an jedem Punkt eine maximale Krümmung nicht überschritten bzw. ein minimaler Krümmungsradius r_{κ} nicht unterschritten werden darf.

An einer ersten axialen Position 45 schließt sich an den ersten Übergangsbereich 15 die Mantelfläche 16 an, wobei die Steigung der Kontur am Übergang zur Mantelfläche 16 und insbesondere an der ersten axialen Position 45 stetig verläuft. Insofern ergibt sich in einer Längsebene durch die Drehachse 3 betrachtet ein stetiger Verlauf der Steigung der Kontur der Walze 2 am Übergang vom ersten stirnseitigen Bereich 14 zum ersten gewölbten Übergangsbereich 15, innerhalb des ersten gewölbten Übergangsbereichs 15 und am Übergang vom ersten gewölbten Übergangsbereich 15 zur Mantelfläche 16. Dabei ist die erste axiale Position 45 gegenüber dem Rand des ersten stirnseitigen Bereich 14 in axialer Richtung um einen Abstand L1 zum Zentrum der Walze 2 hin versetzt, wobei der Abstand L1 vorzugsweise zwischen 3% und 25% der Länge L beträgt. In Figur 6 ist der Abstand L1 der ersten axialen Position 45 in axialer Richtung relativ zum ersten stirnseitigen Bereich 14 durch den Doppelpfeil 46 veranschaulicht.

Vorzugsweise entspricht der Verlauf der Kontur der Walze 2 am zweiten axialen Ende der Walze 2 dem Verlauf der Kontur am ersten axialen Ende der Walze 2. Alternativ dazu kann sich die Kontur am zweiten axialen Ende der Walze 2 aber auch von der Kontur am ersten axialen Ende der Walze 2 unterscheiden. Der zweite stirnseitige Bereich 38 weist vorzugsweise an seinem kreisförmig umlaufenden Rand einen Radius R₂ auf, der im Bereich zwischen 30% und 47% des Durchmessers D liegt. In Figur 6 ist der Radius R₂ durch den Doppelpfeil 47 dargestellt. Der zweite stirnseitige Bereich 38 erstreckt sich lediglich bis zur zweiten radialen Position 48. Dort schließt sich an den zweiten stirnseitigen Bereich 38 der zweite gewölbte Übergangsbereich 39 an, wobei die Steigung am Übergang zwischen dem zweiten stirnseitigen Bereich 38 und dem zweiten gewölbten Übergangsbereich 39 stetig verläuft. Am Übergang vom zweiten stirnseitigen Bereich 38 zum zweiten Übergangsbereich 39, innerhalb des zweiten Übergangsbereichs 39 und am Übergang vom zweiten Übergangsbereich 39 zur Mantelfläche 16 ist die Krümmung κ kleiner als eine maximale Krümmung, die als Kehrwert eines minimalen Krümmungsradius r_{κ} erhalten wird. Dabei beträgt der minimale Krümmungsradius r_{κ} vorzugsweise 5% des Durchmessers D. Vorzugsweise liegt die Krümmung innerhalb des zweiten Übergangsbereichs 39 in einem Bereich, der einem Krümmungsradius zwischen 5% und 40% des Durchmessers D entspricht. Dabei kann die Krümmung wie bei dem in Figur 6 gezeigten Beispiel an jedem Punkt des zweiten Übergangsbereichs 39 durch einen konstanten Krümmungsradius gegeben sein. Die Krümmung kann aber innerhalb des zweiten Übergangsbereichs 39 auch variieren, wobei die Krümmung an jedem Punkt kleiner als eine vorgegebene maximale Krümmung sein muss, um scharfe Kanten im Verlauf der Kontur der Walze 2 im zweiten Übergangsbereich 39 zu vermeiden. An einer zweiten axialen Position 49 geht der zweite Übergangsbereich 39 in die Mantelfläche 16 über, wobei die Steigung am Übergang zwischen dem zweiten Übergangsbereich 39 und der Mantelfläche 16 stetig verläuft. Insofern verläuft die Steigung der Kontur der Walze 2 in einer Längsebene durch die Mittenachse 3 betrachtet am Übergang vom zweiten stirnseitigen Bereich 38 zum zweiten gewölbten Übergangsbereich 39, innerhalb des zweiten gewölbten Übergangsbereichs 39 und am Übergang vom zweiten gewölbten Übergangsbereich 39 zur Mantelfläche 16 jeweils stetig. Die zweite axiale Position 49 ist gegenüber dem zweiten stirnseitigen Bereich 38 der Walze 2 in axialer Richtung um einen Abstand L2 zum Zentrum der Walze 2 hin versetzt, wobei der Abstand L2 vorzugsweise im Bereich zwischen 3% und 25% der Länge L der Walze 2 liegt. In Figur 6 ist der Abstand L2 durch den Doppelpfeil 50 dargestellt. Der Vorteil der in Figur 6 gezeigten Formgebung der Walze ist insbesondere, dass durch die nach außen gewölbten Übergangsbereiche 15 und 39 eine besonders wirkungsvolle Abschirmung der innerhalb der Aufnahme 7 entstehenden Röntgenstrahlung ermöglicht wird.

Entlang der axialen Richtung der Walze von der Mitte der Walze aus zu einer Stirnseite hin betrachtet, bleibt der Durchmesser der äußeren Kontur der Walze gleich oder wird kleiner. Wenn man also die äußere Kontur der Walze in axialer Richtung von der Mitte der Walze zu einer Stirnseite hin verfolgt, bleibt der Durchmesser der äußeren Kontur der Walze in axialer Richtung betrachtet gleich oder wird kleiner.

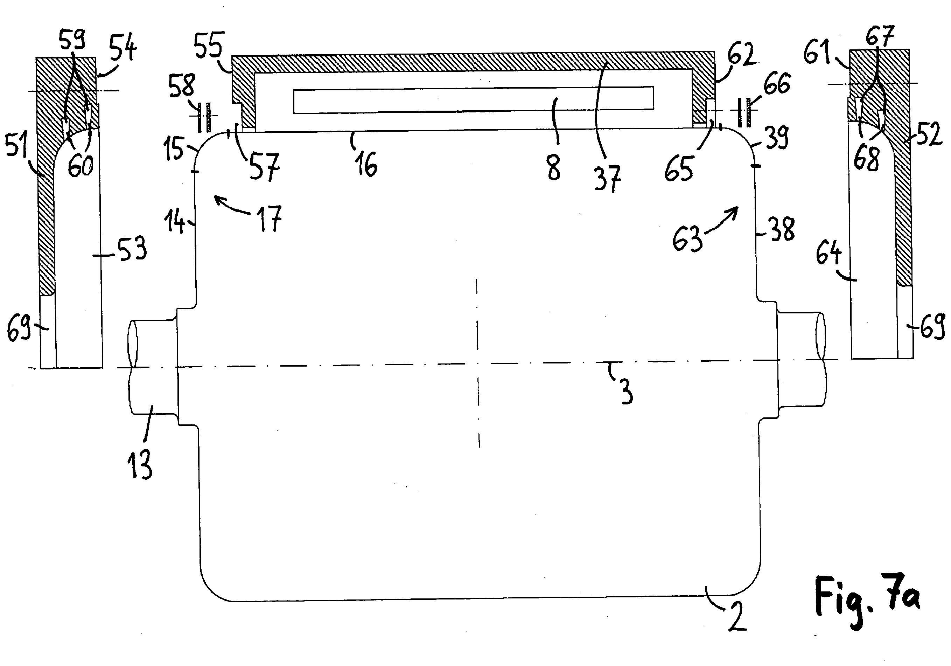

In Figur 7a ist gezeigt, wie an den beiden Stirnseiten der Bestrahlungseinheit 37 jeweils Abschirmblöcke 51, 52 lösbar angebracht werden. Durch die Abschirmblöcke 51, 52 wird der bogenförmige Spalt zwischen der Bestrahlungseinheit 37 und der Walze 2 an den beiden Stirnseiten so abgeschirmt, dass die entstehende Röntgenstrahlung wirksam zurückgehalten wird.

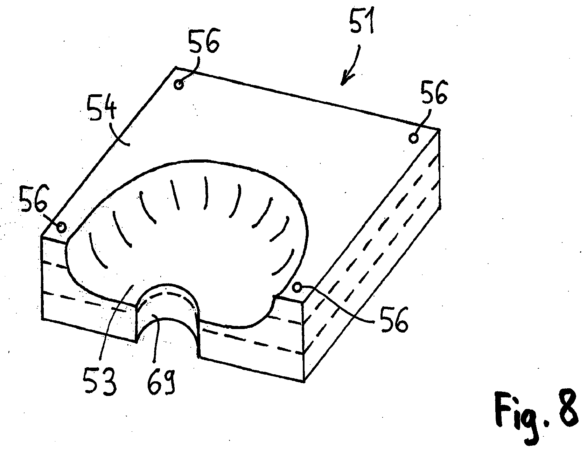

In Figur 8 ist der Abschirmblock 51 im Schrägbild gezeigt. Zu erkennen ist die Ausnehmung 53, die als negative Hohlform zu zumindest einem Teil des stirnseitigen Endprofils 17 der Walze 2 ausgebildet ist. Die Innenfläche der Ausnehmung 53 ist komplementär zur Stirnfläche 14 und zum gewölbten Übergangsbereich 15 ausgebildet. Insbesondere weist die Ausnehmung 53 eine umlaufende konkave Wölbung auf, die komplementär zu dem konvex nach außen gewölbten Übergangsbereich 15 der Walze 2 ausgebildet ist. Der Abschirmblock 51 weist eine Auflagefläche 54 auf, die dazu vorgesehen ist, an der stirnseitigen Montagefläche 55 der Bestrahlungseinheit 37 lösbar befestigt zu werden. Dabei erstreckt sich die stirnseitige Montagefläche 55 der Bestrahlungseinheit 37 vorzugsweise in einer zur Drehachse der Walze 2 im Wesentlichen senkrechten Ebene. Alternativ dazu könnte die stirnseitige Montagefläche 55 auch in einer relativ zur Mittenachse 3 schräg geneigten Ebene verlaufen. Beispielsweise könnte die stirnseitige Montagefläche 55 in einer Ebene verlaufen, die gegenüber einer zur Mittenachse 3 senkrechten Ebene um einen Winkel zwischen 0° und 60° geneigt ist. In diesem Fall würde auch die Auflagefläche 54 des Abschirmblocks 51 in einer zur Mittenachse 3 schräg geneigten Ebene verlaufen. Wenn der Abschirmblock 51 an der stirnseitigen Montagefläche 55 der Bestrahlungseinheit 37 befestigt ist, ergibt sich zwischen der Ausnehmung 53 und dem stirnseitigen Endprofil 17 der Walze 2 ein Spaltbereich, durch den die entstehende Röntgenstrahlung wie in Figur 2 und 3 veranschaulicht mehrfach gebrochen und somit abgeschirmt wird. Vorzugsweise weist der Spaltbereich eine im Wesentlichen gleichmäßige Spaltbreite auf.

Die lösbare Befestigung des Abschirmblocks 51 an der stirnseitigen Montagefläche 55 der Bestrahlungseinheit 37 erfolgt vorzugsweise mittels hierfür vorgesehener Befestigungselemente 56, beispielsweise mithilfe von Passstiften, Schraubverbindungen, Klemmelementen oder anderen Befestigungselementen. Die Befestigungselemente 56 können beispielsweise dazu vorgesehen sein, den Abschirmblock 51 in einer Position zu fixieren, in der die Auflagefläche 54 auf der stirnseitigen Montagefläche 55 aufliegt. Vorzugsweise liegt die Auflagefläche 54 plan auf der stirnseitigen Montagefläche 55 auf. Alternativ dazu können die Befestigungselemente 56 dazu ausgebildet sein, eine verstellbare Positionierung des Abschirmblocks 51 relativ zu der Bestrahlungseinheit 37 zu ermöglichen, um auf diese Weise beispielsweise den Spaltbereich zwischen der Ausnehmung 53 und dem stirnseitigen Endprofil 17 einstellen zu können. Dabei kann das Verstellen der Position des Abschirmblocks 51 relativ zur Bestrahlungseinheit 37 mittels der Befestigungselemente 56 mindestens eines von folgenden umfassen: eine Positionierung des Abschirmblocks 51 in axialer Richtung, eine Positionierung des Abschirmblocks 51 in einer zur axialen Richtung senkrechten oder schrägen Ebene, eine Einstellung der Neigung des Abschirmblocks 51 relativ zu einer Querebene zur Mittenachse 3. Insbesondere kann der Abschirmblock 51 mittels der Befestigungselemente 56 so positioniert werden, dass sich zwischen der Ausnehmung 53 und dem stirnseitigen Endprofil 17 ein gewünschter Spaltbereich ergibt, beispielsweise ein homogen ausgebildeter Spaltbereich von gleichmäßiger Spaltbreite. Zusätzlich oder alternativ dazu kann durch Einstellen der Position des Abschirmblocks 51 die Spaltbreite des Spaltbereichs eingestellt werden.

An dem der Walze 2 zugewandten Bereich der stirnseitigen Montagefläche 55 ist eine um einen Teil der Walze 2 umlaufende Vertiefung 57 vorgesehen, in die ein oder mehrere bogenförmige Bleche 58 einsetzbar sind. Dabei erstrecken sich die in die Vertiefung 57 eingesetzten bogenförmigen Bleche 58 bis hin zur Oberfläche der Walze 2 und bewirken so eine gasdichte oder zumindest annähernd gasdichte Abdichtung zwischen dem von dem mindestens einen Elektronenstrahler 8 bestrahlten Bereich der Walze 2 und dem Spaltbereich, der zwischen dem Abschirmblock 51 und dem stirnseitigen Endprofil 17 der Walze 2 ausgebildet ist. Beispielsweise kann im Spaltbereich zwischen dem Abschirmblock 51 und dem stirnseitigen Endprofil 17 der Walze 2 ein Vakuum erzeugt werden. Auf diese Weise kann die Bestrahlung der Bahn mit Elektronen im Vakuum durchgeführt werden, wodurch die Effizienz der Bestrahlung verbessert wird. Mit der in Figur 7a gezeigten Gasabdichtung mittels der bogenförmigen Bleche 58 lässt sich beispielsweise ein Vakuum im Bereich von etwa 50 ppm bis 60 ppm oder sogar von unter 50 ppm aufrechterhalten. Darüber hinaus entsteht infolge der Elektronenbestrahlung innerhalb der Bestrahlungseinheit 37 Ozon. Durch die Gasabdichtung wird verhindert, dass das Ozon nach draußen dringen kann. Alternativ zur Erzeugung eines Vakuums kann in den Spaltbereich zwischen dem mindestens einen Elektronenstrahler 8 und der Mantelfläche 16 beispielsweise ein Edelgas wie Argon eingeleitet werden, In diesem Fall wird das eingeleitete Edelgas mittels der bogenförmigen Bleche 58 im Spaltbereich zwischen dem mindestens einen Elektronenstrahler 8 und der Mantelfläche 16 gehalten.

Die bogenförmigen Bleche 58 können vorzugsweise als Segmente eines Kreisrings ausgebildet sein, beispielsweise in Form von einen Halbkreis überdeckenden Bogen. Dabei kann ein bogenförmiges Blech beispielsweise auch aus zwei oder mehr benachbart zueinander angeordneten Kreisbogensegmenten zusammengesetzt werden.

Zur Verbesserung der Strahlungsabsorption können innerhalb des Abschirmblocks 51 Aussparungen 59 vorgesehen sein, in die Einsätze 60 aus strahlungsabsorbierendem Material einsetzbar sind. Alternativ dazu könnte in die Aussparungen 59 beispielsweise geschmolzenes Abschirmmaterial eingebracht werden, beispielsweise geschmolzenes Blei. Durch die Einsätze 60 wird mit einer geringen Menge von strahlungsabsorbierendem Material eine effiziente zusätzliche Strahlungsabschirmung geschaffen, die insbesondere die aus dem bogenförmigen Spalt zwischen der Bestrahlungseinheit 37 und der Walze 2 austretende Strahlung absorbiert. Wie in Figur 8 durch die gestrichelten Linien veranschaulicht, könnte der Abschirmblock 51 beispielsweise aus mehreren übereinander angeordneten Platten aufgebaut sein, die jeweils Ausnehmungen für Einsätze aus strahlungsabsorbierendem Material aufweisen. Bei einem derartigen Aufbau des Abschirmblocks 51 aus mehreren Platten können die Ausnehmungen für die Einsätze an oder in den Auflageflächen der Platten ausgebildet sein, so dass sich die Einsätze aus strahlungsabsorbierendem Material innerhalb des Abschirmblocks 51 befinden.

In Figur 7a ist an der zweiten Stirnseite der Bestrahlungseinheit 37 der zweite Abschirmblock 52 lösbar angebracht, wobei die Auflagefläche 61 des zweiten Abschirmblocks 52 an der stirnseitigen Montagefläche 62 der Bestrahlungseinheit 37 lösbar befestigt ist. Dabei erstreckt sich das zweite stirnseitige Endprofil 63 in die Ausnehmung 64 des zweiten Abschirmblocks 52 hinein und wird zumindest zum Teil von der Ausnehmung 64 umschlossen. An der stirnseitigen Montagefläche 62 der Bestrahlungseinheit 37 ist ebenfalls eine um einen Teil der Walze 2 umlaufende Vertiefung 65 vorgesehen, in die bogenförmige Bleche 66 zur Gasabdichtung einsetzbar sind. Ebenso wie der erste Abschirmblock 51 weist auch der zweite Abschirmblock 52 Aussparungen 67 auf, in die Einsätze 68 aus strahlungsabschirmendem Material wie beispielsweise Blei einsetzbar sind.

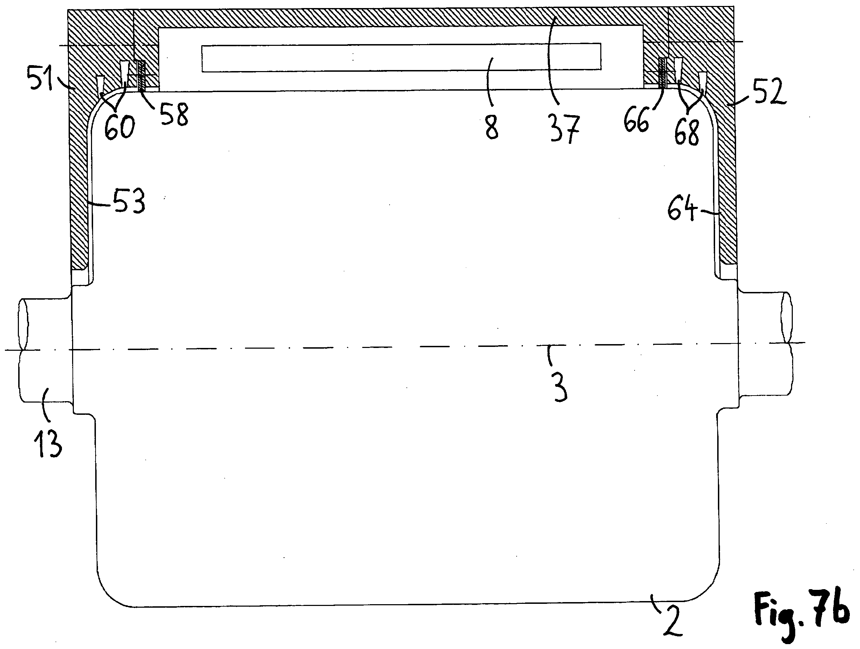

In Figur 7b ist die Bestrahlungsvorrichtung im zusammengebauten Zustand gezeigt, wobei der Abschirmblock 51 mit seiner Auflagefläche 54 auf der stirnseitigen Montagefläche 55 der Bestrahlungseinheit 37 lösbar befestigt ist und wobei der Abschirmblock 52 mit seiner Auflagefläche 64 an der stirnseitigen Montagefläche 62 lösbar befestigt ist. Bei dem in den Figuren 7a und 7b gezeigten Beispiel erstrecken sich die Abschirmblöcke 51, 52 von dem mindestens einen Elektronenstrahler 8 ausgehend bis hin zur Drehachse 3, wobei in den Abschirmblöcken 51, 52 jeweils Aussparungen 69 für die Antriebswelle 13 vorgesehen sind. Vorzugsweise deckt der Abschirmblock 51 in Richtung der Drehachse 3 betrachtet mindestens 30 %, weiter vorzugsweise mindestens 40 %, weiter vorzugsweise mindestens 50 %, weiter vorzugsweise mindestens 55 %, weiter vorzugsweise mindestens 60 % der Stirnfläche beziehungsweise Querschnittsfläche der Walze 2 ab. Vorzugsweise deckt der Abschirmblock 51 weniger als 80 %, weiter vorzugsweise weniger als 70 %, weiter vorzugsweise weniger als 65 % der Stirnfläche beziehungsweise Querschnittsfläche der Walze 2 ab. Auf diese Weise wird eine effektive Abschirmung der Röntgenstrahlung erzielt, wobei die Zugänglichkeit der Walze 2 in der offenen Walzenanordnung weiter gewährleistet ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Eine Walze (2) für eine Bestrahlungsvorrichtung, wobei die Walze (2) dazu ausgelegt ist, eine zu bestrahlende Materialbahn (1) an mindestens einem Elektronenstrahler (8) vorbei zu führen,
wobei die Walze (2) aufweist:
einen ersten stirnseitigen Bereich (14) der Walze, wobei der Durchmesser des ersten stirnseitigen Bereichs (14) kleiner ist als der Durchmesser der Walze,
eine Mantelfläche (16) der Walze, die als Mantelfläche (16) eines geraden Kreiszylinders ausgebildet ist, wobei die Mantelfläche (16) sich in axialer Richtung von einer ersten axialen Position (45) zu einer zweiten axialen Position (49) der Walze (2) erstreckt,
wobei die erste axiale Position (45) einen axialen Abstand (46) zum Rand des ersten stirnseitigen Bereichs (14) aufweist, der zwischen 3% und 25% der Länge der Walze beträgt, und wobei die zweite axiale Position (49) vom ersten stirnseitigen Bereich (14) weiter entfernt ist als die erste axiale Position (45),
**dadurch gekennzeichnet, dass**
die Walze (2) einen ersten gewölbten Übergangsbereich (15) aufweist, der sich vom Rand des ersten stirnseitigen Bereichs (14) ausgehend ringförmig in einem kontinuierlichen Verlauf bis zur ersten axialen Position (45) der Walze (2) erstreckt,
wobei in einer Längsebene durch die Mittenachse (3) der Walze (2) betrachtet eine Krümmung der Kontur der Walze (2) am Übergang vom ersten stirnseitigen Bereich (14) zum ersten gewölbten Übergangsbereich (15), innerhalb des ersten gewölbten Übergangsbereichs (15) und am Übergang vom ersten gewölbten Übergangsbereich (15) zur Mantelfläche (16) jeweils kleiner als eine maximale Krümmung ist, die einem minimalen Krümmungsradius von 5% des Durchmessers der Walze (2) entspricht.

2. Walze (2) nach Anspruch 1, **dadurch gekennzeichnet, dass** in einer Längsebene durch die Mittenachse (3) der Walze (2) betrachtet eine Steigung der Kontur der Walze (2) am Übergang vom ersten stirnseitigen Bereich (14) zum ersten gewölbten Übergangsbereich (15), innerhalb des ersten gewölbten Übergangsbereichs (15) und am Übergang vom ersten gewölbten Übergangsbereich (15) zur Mantelfläche (16) jeweils stetig verläuft.

3. Walze (2) nach Anspruch 1 oder Anspruch 2, **gekennzeichnet durch** mindestens eines von folgenden:
- in einer Längsebene durch die Mittenachse (3) der Walze (2) betrachtet verläuft eine Steigung der Kontur der Walze (2) am Übergang vom ersten stirnseitigen Bereich (14) zum ersten gewölbten Übergangsbereich (15), innerhalb des ersten gewölbten Übergangsbereichs (15) und am Übergang vom ersten gewölbten Übergangsbereich (15) zur Mantelfläche (16) jeweils monoton fallend oder monoton steigend;
- in einer Längsebene durch die Mittenachse (3) der Walze (2) betrachtet bleibt das Vorzeichen der Krümmung der Kontur der Walze (2) am Übergang vom ersten stirnseitigen Bereich (14) zum ersten gewölbten Übergangsbereich (15), innerhalb des ersten gewölbten Übergangsbereichs (15) und am Übergang vom ersten gewölbten Übergangsbereich (15) zur Mantelfläche (16) unverändert;
- in einer Längsebene durch die Mittenachse (3) der Walze (2) betrachtet weist die Kontur der Walze (2) innerhalb des ersten gewölbten Übergangsbereichs (15) in jedem Punkt der Kontur eine Krümmung auf, die einem Krümmungsradius im Bereich zwischen 5% und 40% des Durchmessers der Mantelfläche (16) der Walze (2) entspricht;
- in einer Längsebene durch die Mittenachse (3) der Walze (2) betrachtet ist eine Krümmung der Kontur der Walze (2) am Übergang vom ersten stirnseitigen Bereich (14) zum ersten Übergangsbereich (15), innerhalb des ersten gewölbten Übergangsbereichs (15) und am Übergang vom ersten Übergangsbereich (15) zur Mantelfläche (16) in jedem Punkt der Kontur kleiner als eine maximale Krümmung, die gleich dem Kehrwert eines Krümmungsradius von 5% des Durchmessers der Mantelfläche (16) der Walze (2) ist;
- in einer Längsebene durch die Mittenachse (3) der Walze (2) betrachtet weist die Kontur der Walze (2) innerhalb des ersten gewölbten Übergangsbereichs (15) in jedem Punkt der Kontur eine Krümmung auf, die innerhalb eines Bereichs liegt, der durch Kehrwerte des Krümmungsradius im Bereich von 5% bis 40% des Durchmessers der Mantelfläche (16) der Walze (2) gegeben ist;
- die Krümmung innerhalb des ersten Übergangsbereichs (15) ist durch einen einzigen Krümmungsradius gegeben, wobei dieser Krümmungsradius im Bereich zwischen 5% und 40% des Durchmessers der Mantelfläche (16) der Walze (2) liegt;
- die Krümmung verläuft innerhalb des ersten gewölbten Übergangsbereichs (15) stetig.

4. Walze nach einem der Ansprüche 1 bis 3, **dadurch gekennzeichnet, dass** die Walze einen zweiten stirnseitigen Bereich (38) aufweist, der in axialer Richtung betrachtet gegenüberliegend zum ersten stirnseitigen Bereich (14) angeordnet ist,
wobei der zweite stirnseitige Bereich (38) der Walze (2) einen Durchmesser aufweist, der kleiner als der Durchmesser der Walze (2) ist,
wobei die zweite axiale Position (49) der Walze (2) einen axialen Abstand zum Rand des zweiten stirnseitigen Bereichs (38) aufweist, der zwischen 5% und 25% der Länge der Walze (2) beträgt,
wobei die Walze (2) einen zweiten gewölbten Übergangsbereich (39) aufweist, der sich vom Rand des zweiten stirnseitigen Bereichs (38) ausgehend ringförmig in einem kontinuierlichen Verlauf bis zur zweiten axialen Position (49) der Mantelfläche (16) erstreckt,
wobei in einer Längsebene durch die Mittenachse (3) der Walze (2) betrachtet eine Steigung einer Kontur der Walze (2) am Übergang vom zweiten stirnseitigen Bereich (38) zum zweiten gewölbten Übergangsbereich (39), innerhalb des zweiten gewölbten Übergangsbereichs (39) und am Übergang vom zweiten gewölbten Übergangsbereich (39) zur Mantelfläche (16) jeweils stetig verläuft, und
in einer Längsebene durch die Mittenachse (3) der Walze (2) betrachtet eine Krümmung der Kontur der Walze (2) innerhalb des zweiten gewölbten Übergangsbereichs (39) in jedem Punkt der Kontur kleiner als eine maximale Krümmung ist, die einem minimalen Krümmungsradius von 5% des Durchmessers der Walze (2) entspricht.

5. Eine Bestrahlungsvorrichtung für die Bestrahlung einer Materialbahn (1) mit Elektronen, welche aufweist:
eine drehbar gelagerte Walze (2) nach einem der Ansprüche 1 bis 4 zur Führung einer zu bestrahlenden Materialbahn (1),
eine Bestrahlungseinheit (6, 37) mit einer Aufnahme (7), die sich in Längsrichtung der Walze (2) erstreckt und dazu ausgelegt ist, einen Teilabschnitt der Walze (2) zu umschließen, wobei innerhalb der Aufnahme (7) mindestens ein Elektronenstrahler (8) angeordnet ist, der dazu ausgelegt ist, eine über die Walze (2) führbare Materialbahn (1) mit Elektronen zu bestrahlen.

6. Bestrahlungsvorrichtung nach Anspruch 5, **gekennzeichnet durch** mindestens eines von folgenden:
- eine der Walze (2) zugewandte Innenwandung der Aufnahme (7) folgt zumindest in einem Teilbereich dem Verlauf des ersten gewölbten Übergangsbereichs (15) der Walze (2);
- eine der Walze (2) zugewandte Innenwandung der Aufnahme (7) folgt zumindest in einem Teilbereich dem Verlauf des ersten gewölbten Übergangsbereichs (15) der Walze (2), wobei ein Spaltbereich (20) zwischen der Innenwandung der Aufnahme (7) und dem ersten gewölbten Übergangsbereich (15) ausgebildet ist;
- eine der Walze (2) zugewandte Innenwandung der Aufnahme (7) folgt zumindest in einem Teilbereich dem Verlauf des ersten gewölbten Übergangsbereichs (15) der Walze (2), wobei ein Spaltbereich (20) zwischen der Innenwandung der Aufnahme (7) und dem ersten gewölbten Übergangsbereich (15) ausgebildet ist, wobei der Spaltbereich (20) so dimensioniert ist, dass eine wirksame Strahlungsabschirmung erfolgt;
- eine der Walze (2) zugewandte Innenwandung der Aufnahme (7) weist zumindest in einem Teilbereich eine zum ersten gewölbten Übergangsbereich (15) der Walze (2) komplementäre Form auf;
- der erste gewölbte Übergangsbereich (15) der Walze (2) ist zumindest teilweise von der Aufnahme (7) umgeben, die zumindest in einem Teilbereich eine zum ersten gewölbten Übergangsbereich (15) komplementäre Form aufweist;
- zumindest ein Teilbereich der Aufnahme (7) ist als negative Hohlform zu zumindest einem Teilbereich des ersten gewölbten Übergangsbereichs (15) der Walze (2) ausgebildet.

7. Bestrahlungsvorrichtung nach Anspruch 5 oder Anspruch 6, **gekennzeichnet durch** mindestens eines von folgenden:
- die Aufnahme (7) weist quer zur Mittenachse (3) der Walze (2) ein bogenförmiges Profil auf, wobei das bogenförmige Profil der Aufnahme (7) dazu ausgelegt ist, einen Teilabschnitt der Walze (2) zu umschließen;
- der mindestens eine Elektronenstrahler (8) erstreckt sich in axialer Richtung entlang eines der Walze (2) zugewandten Bereichs der Aufnahme (7);
- bei der Aufnahme (7) handelt es sich um eine konkav geformte Aufnahme (7);
- die Walze (2) ist an einer als Drehachse (3) ausgebildeten Mittenachse drehbar gelagert;
- innerhalb der Bestrahlungseinheit (6, 37) ist eine den mindestens einen Elektronenstrahler (8) umgebende Strahlungsabschirmung vorgesehen;
- mindestens eine Montagefläche (55, 62) der Bestrahlungseinheit (6, 37) verläuft im Wesentlichen in einer zur Mittenachse (3) der Walze (2) senkrechten Ebene.

8. Bestrahlungsvorrichtung nach einem der Ansprüche 5 bis 7, **dadurch gekennzeichnet, dass** die Bestrahlungsvorrichtung einen Abschirmblock (51, 52) zur Strahlungsabschirmung umfasst, wobei der Abschirmblock (51, 52) aufweist:
eine Auflagefläche (54, 61), über die der Abschirmblock (51, 52) an einer Montagefläche (55, 62) der Bestrahlungseinheit (6, 37) lösbar befestigbar ist,
eine im Abschirmblock (51, 52) vorgesehene Ausnehmung (53, 64), wobei zumindest ein Teilbereich der Ausnehmung (53, 64) als negative Hohlform zu zumindest einem Teilbereich des ersten gewölbten Übergangsbereichs (15) der Walze (2) ausgebildet ist.

9. Eine Bestrahlungsvorrichtung für die Bestrahlung einer Materialbahn (1) mit Elektronen, welche aufweist:
eine drehbar gelagerte Walze (2) zur Führung einer zu bestrahlenden Materialbahn (1),
wobei die Walze (2) ein erstes stirnseitiges Endprofil (17) an einem ersten axialen Ende der Walze (2) und eine Mantelfläche (16) umfasst, wobei die Mantelfläche (16) der Walze (2) als Mantelfläche (16) eines geraden Kreiszylinders ausgebildet ist und sich von dem ersten stirnseitigen Endprofil (17) aus in axialer Richtung der Walze (2) erstreckt,
eine Bestrahlungseinheit (37) mit einer Aufnahme (7), wobei sich die Aufnahme (7) in Längsrichtung der Walze (2) erstreckt und dazu ausgelegt ist, einen Teilabschnitt der Walze (2) zu umschließen, wobei innerhalb der Aufnahme (7) mindestens ein Elektronenstrahler (8) angeordnet ist, der dazu ausgelegt ist, eine über die Walze (2) führbare Materialbahn (1) mit Elektronen zu bestrahlen,
**dadurch gekennzeichnet, dass**
das erste stirnseitige Endprofil (17) der Walze (2) einen konvex gewölbten Bereich (15) umfasst,
wobei die Bestrahlungsvorrichtung einen Abschirmblock (51) zur
Strahlungsabschirmung umfasst, wobei der Abschirmblock (51) aufweist:
eine Auflagefläche (54), über die der Abschirmblock (51) an einer Montagefläche (55) der Bestrahlungseinheit (37) lösbar befestigbar ist,
eine im Abschirmblock (51) vorgesehene Ausnehmung (53), wobei zumindest ein Teilbereich der Ausnehmung (53) als negative Hohlform zu zumindest einem Teilbereich des konvex gewölbten Bereichs (15) ausgebildet ist.

10. Bestrahlungsvorrichtung nach Anspruch 9, **gekennzeichnet durch** mindestens eines von folgenden:
- die Ausnehmung (53) folgt zumindest in einem Teilbereich dem Verlauf des ersten stirnseitigen Endprofils (17) der Walze (2);
- die Ausnehmung (53) folgt zumindest in einem Teilbereich dem Verlauf des ersten stirnseitigen Endprofils (17) der Walze (2), wobei ein Spaltbereich (20) zwischen der Innenwandung der Ausnehmung (53) und dem ersten stirnseitigen Endprofil (17) der Walze (2) ausgebildet ist;
- die Ausnehmung (53) folgt zumindest in einem Teilbereich dem Verlauf des ersten stirnseitigen Endprofils (17) der Walze (2), wobei ein Spaltbereich (20) zwischen der Innenwandung der Ausnehmung (53) und dem ersten stirnseitigen Endprofil (17) der Walze (2) ausgebildet ist, wobei der Spaltbereich (20) so dimensioniert ist, dass eine wirksame Strahlungsabschirmung erfolgt;
- die Ausnehmung (53) folgt zumindest in einem Teilbereich dem Verlauf des ersten stirnseitigen Endprofils (17) der Walze (2), wobei ein Spaltbereich (20) zwischen der Innenwandung der Ausnehmung (53) und dem ersten stirnseitigen Endprofil (17) der Walze (2) ausgebildet ist, wobei der Spaltbereich (20) eine im Wesentlichen homogene Spaltbreite aufweist;
- die Ausnehmung (53) weist zumindest in einem Teilbereich eine zum ersten stirnseitigen Endprofil (17) der Walze (2) komplementäre Form auf;
- die Ausnehmung (53) ist als negative Hohlform zu zumindest einem Teilbereich des ersten stirnseitigen Endprofils (17) der Walze (2) ausgebildet;
- das erste stirnseitige Endprofil (17) der Walze (2) ist zumindest teilweise von der dazu komplementär geformten Ausnehmung (53) umschlossen, wenn der Abschirmblock (51) an der Montagefläche (55) befestigt ist;
- die Ausnehmung (53) ist dazu ausgelegt, zumindest einen Teil des ersten stirnseitigen Endprofils (17) der Walze (2) aufzunehmen, wenn der Abschirmblock (51) an der Montagefläche (55) befestigt ist;
- die Ausnehmung (53) ist so ausgebildet, dass sich, wenn der Abschirmblock (51) an der Montagefläche (55) befestigt ist, zumindest ein Teil des ersten stirnseitigen Endprofils (17) der Walze (2) in die Ausnehmung (53) hinein erstreckt;
- die Bestrahlungsvorrichtung weist mindestens einen weiteren Abschirmblock (52) auf.

11. Bestrahlungsvorrichtung nach Anspruch 9 oder Anspruch 10, **dadurch gekennzeichnet, dass** in axialer Richtung gegenüberliegend zum ersten stirnseitigen Endprofil (17) ein zweites stirnseitiges Endprofil (63) an einem zweiten axialen Ende der Walze (2) angeordnet ist und sich die Mantelfläche (16) der Walze (2) von dem ersten stirnseitigen Endprofil (17) zu dem zweiten stirnseitigen Endprofil (63) in axialer Richtung erstreckt.

12. Bestrahlungsvorrichtung nach einem der Ansprüche 9 bis 11, **dadurch gekennzeichnet, dass** es sich bei der Walze (2) um eine Walze (2) gemäß einem der Ansprüche 1 bis 4 handelt.

13. Eine Bestrahlungsvorrichtung für die Bestrahlung einer Materialbahn (1) mit Elektronen, welche aufweist:
eine drehbar gelagerte Walze (2) zur Führung einer zu bestrahlenden Materialbahn (1),
wobei die Walze (2) ein erstes stirnseitiges Endprofil (17) an einem ersten axialen Ende der Walze (2) und eine Mantelfläche (16) umfasst, wobei die Mantelfläche (16) der Walze als Mantelfläche (16) eines geraden Kreiszylinders ausgebildet ist und sich von dem ersten stirnseitigen Endprofil (17) aus in axialer Richtung der Walze (2) erstreckt,
eine Bestrahlungseinheit (37) mit einer Aufnahme (7), wobei sich die Aufnahme (7) in Längsrichtung der Walze (2) erstreckt und dazu ausgelegt ist, einen Teilabschnitt der Walze (2) zu umschließen, wobei innerhalb der Aufnahme (7) mindestens ein Elektronenstrahler (8) angeordnet ist, der dazu ausgelegt ist, eine über die Walze (2) führbare Materialbahn (1) mit Elektronen zu bestrahlen,
**dadurch gekennzeichnet, dass**
die Bestrahlungsvorrichtung einen Abschirmblock (51) zur Strahlungsabschirmung umfasst, wobei der Abschirmblock (51) aufweist:
eine Auflagefläche (54), über die der Abschirmblock (51) an einer Montagefläche (55) der Bestrahlungseinheit (37) lösbar befestigbar ist,
eine im Abschirmblock (51) vorgesehene Ausnehmung (53), die dazu ausgelegt ist, das erste stirnseitige Endprofil (17) der Walze (2) zumindest teilweise zu umschließen, wenn der Abschirmblock (51) an der Montagefläche (55) befestigt ist,
wobei der Abschirmblock (51) in Richtung der Mittenachse (3) der Walze (2) betrachtet zumindest 30% des Querschnitts der Walze (2) abdeckt.

14. Verfahren zum Bereitstellen einer Strahlungsabschirmung in einer Bestrahlungsvorrichtung, wobei die Bestrahlungsvorrichtung aufweist:
eine drehbar gelagerte Walze (2) zur Führung einer zu bestrahlenden Materialbahn (1),
wobei die Walze (2) ein erstes stirnseitiges Endprofil (17) an einem ersten axialen Ende der Walze (2) und eine Mantelfläche (16) umfasst, wobei das erste stirnseitige Endprofil (17) einen konvex gewölbten Bereich (15) umfasst, wobei die Mantelfläche (16) der Walze (2) als Mantelfläche (16) eines geraden Kreiszylinders ausgebildet ist und sich von dem ersten stirnseitigen Endprofil (17) aus in axialer Richtung der Walze (2) erstreckt,
eine Bestrahlungseinheit (37) mit einer Aufnahme (7), wobei sich die Aufnahme (7) in Längsrichtung der Walze (2) erstreckt und dazu ausgelegt ist, einen Teilabschnitt der Walze (2) zu umschließen, wobei innerhalb der Aufnahme (7) mindestens ein Elektronenstrahler (8) angeordnet ist, der dazu ausgelegt ist, eine über die Walze (2) führbare Materialbahn (1) mit Elektronen zu bestrahlen,
einen Abschirmblock (51) zur Strahlungsabschirmung, wobei der Abschirmblock (51) aufweist:
eine Auflagefläche (54), über die der Abschirmblock (51) an einer Montagefläche (55) der Bestrahlungseinheit (37) lösbar befestigbar ist, und
eine im Abschirmblock (51) vorgesehene Ausnehmung (53),
wobei das Verfahren folgenden Schritt aufweist:
Anbringen des Abschirmblocks (51) an einer Montagefläche (55) der Bestrahlungseinheit (37) dergestalt, dass sich zumindest ein Teil des ersten stirnseitigen Endprofils (17) der Walze (2) in die Ausnehmung (53) des Abschirmblocks (51) hinein erstreckt, wobei zumindest ein Teilbereich der Ausnehmung (53) als negative Hohlform zu zumindest einem Teilbereich des konvex gewölbten Bereichs (15) ausgebildet ist.

15. Verwendung einer Walze (2) zum Führen einer zu bestrahlenden Materialbahn (1) an mindestens einem Elektronenstrahler (8) vorbei und zum Abschirmen der entstehenden hochenergetischen Strahlung,
wobei die Walze (2) aufweist:
einen ersten stirnseitigen Bereich (14) der Walze, wobei der Durchmesser des ersten stirnseitigen Bereichs (14) kleiner ist als der Durchmesser der Walze,
eine Mantelfläche (16) der Walze, die als Mantelfläche (16) eines geraden Kreiszylinders ausgebildet ist, wobei die Mantelfläche (16) sich in axialer Richtung von einer ersten axialen Position (45) zu einer zweiten axialen Position (49) der Walze (2) erstreckt,
wobei die erste axiale Position (45) einen axialen Abstand (46) zum Rand des ersten stirnseitigen Bereichs (14) aufweist, der zwischen 3% und 25% der Länge der Walze beträgt, und wobei die zweite axiale Position (49) vom ersten stirnseitigen Bereich (14) weiter entfernt ist als die erste axiale Position (45),
wobei die Walze (2) einen ersten gewölbten Übergangsbereich (15) aufweist, der sich vom Rand des ersten stirnseitigen Bereichs (14) ausgehend ringförmig in einem kontinuierlichen Verlauf bis zur ersten axialen Position (45) der Walze (2) erstreckt,
wobei in einer Längsebene durch die Mittenachse (3) der Walze (2) betrachtet eine Krümmung der Kontur der Walze (2) am Übergang vom ersten stirnseitigen Bereich (14) zum ersten gewölbten Übergangsbereich (15), innerhalb des ersten gewölbten Übergangsbereichs (15) und am Übergang vom ersten gewölbten Übergangsbereich (15) zur Mantelfläche (16) jeweils kleiner als eine maximale Krümmung ist, die einem minimalen Krümmungsradius von 5% des Durchmessers der Walze (2) entspricht.
